(19) Europäisches Patentamt
European Patent Office
Office européen des brevets

(11) **EP 4 265 433 A2**

(12) **EUROPEAN PATENT APPLICATION**

(43) Date of publication:
**25.10.2023 Bulletin 2023/43**

(21) Application number: **23165443.5**

(22) Date of filing: **30.03.2023**

(51) International Patent Classification (IPC):
**B43L 1/00** $^{(2006.01)}$   **G02B 5/02** $^{(2006.01)}$

(52) Cooperative Patent Classification (CPC):
**B43L 1/002; G02B 5/0226**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2022 JP 2022058215**

(71) Applicant: **Nitto Denko Corporation**
**Ibaraki-shi, Osaka 567-8680 (JP)**

(72) Inventors:
• **Yamamoto, Saori**
 **Ibaraki-shi, Osaka 567-8680 (JP)**
• **Yaegashi, Masahiro**
 **Ibaraki-shi, Osaka 567-8680 (JP)**
• **Toyota, Yuji**
 **Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **WRITING BOARD SET AND PEEKING PREVENTION SYSTEM**

(57)     A writing board set includes a writing board and a writing utensil containing ink. The writing board reflects back, when unpolarized light is incident on its surface at a viewer's side, polarized light which is parallel to a first direction and which has a degree of polarization of 95% or more. $L_d^*$, $a_d^*$, and $b_d^*$ are values of $L^*$, $a^*$, and $b^*$ as obtained by irradiating the surface of the writing board with light that has been transmitted through a polarizing layer having a transmission axis which is orthogonal to the first direction, and measuring total reflectance through spectrophotometry. $L_i^*$, $a_i^*$, and $b_i^*$ are values of $L^*$, $a^*$, and $b^*$ as obtained by irradiating the ink having been introduced onto a surface of a glass panel with unpolarized light, and measuring total reflectance through spectrophotometry. A color difference $\Delta E^*_{ab}$ as defined by eq. (1) is 19 or less:

$$\Delta E^*_{ab} = [(L_i^* - L_d^*)^2 + (a_i^* - a_d^*)^2 + (b_i^* - b_d^*)^2]^{1/2} \quad \ldots (1). \tag{1}$$

FIG.2

EP 4 265 433 A2

**Description**

**BACKGROUND**

1. Technical Field:

The present invention relates to a writing board set and a peeking prevention system.

2. Description of the Related Art:

The use of open conference rooms that provide a sense of spatial openness is becoming more widespread. For example, the walls (or partitions) of a conference room may be made of glass panels (or acrylic panels) to provide a sense of openness because of their transparency. While transparency of the walls of the conference room provides a sense of openness, it can be a problem if an outside stranger peeks at the information (e.g., text characters or drawings) that is drawn on a whiteboard in the conference room.

The specification of USP No. 10061138 (hereinafter "Patent Document 1") discloses a peeking prevention system that includes a space, an information screen disposed in the space, and a window to delimit the space from the surroundings. The "information screen" displays information by reflecting and/or emitting polarized light that is parallel to a first direction, thereby presenting the displayed information within the space. As an example of the information screen, an information screen that includes a whiteboard and a polarizer attached onto the surface of the whiteboard is described. The window includes a transparent substrate and a polarizer that absorbs light polarized in parallel to the first direction. While allowing the inside of the space to be seen through the transparent window from outside of the space, the information displayed on the information screen can be made invisible.

**SUMMARY**

According to a study by the inventors, when text characters, drawings, or the like are drawn with an ink containing a pigment or dyestuff on the surface of the information screen described in Patent Document 1 (specifically, an information screen that includes a whiteboard and a polarizer; the same applies hereinafter), the text characters, drawings, or other information that have been drawn may be visible (i.e., peeked) from outside of the space, depending on the color of the ink used.

The present invention has been made in order to solve the above problems, and an objective thereof is to provide a peeking prevention system and a writing board set that are able to sufficiently restrain information that is displayed with an ink on the surface of a writing board from being visible from outside of the space. In the present specification, a "writing board" means any board that allows information to be displayed on its surface, e.g., text characters, symbols, diagrams, or drawings drawn with an ink, and includes what is commonly referred to as a whiteboard or a blackboard, for example.

According to embodiments of the present invention, means for solution as recited in the following Items are provided.

[Item 1]

A writing board set comprising:

a writing board that includes

a first polarizing layer having a transmission axis that is parallel to a first direction and
a diffuse reflection layer or a diffuse reflection plate to diffuse-reflect visible light, the diffuse reflection layer or diffuse reflection plate being disposed on an opposite side of the first polarizing layer from a viewer's side; and

a writing utensil containing ink, wherein,
$L_d^*$, $a_d^*$, and $b_d^*$ are values of $L^*$, $a^*$, and $b^*$ as obtained by irradiating a surface of the writing board at the viewer's side with light that has been transmitted through a second polarizing layer having a transmission axis which is orthogonal to the first direction, and measuring total reflectance through spectrophotometry;
$L_i^*$, $a_i^*$, and $b_i^*$ are values of $L^*$, $a^*$, and $b^*$ as obtained by irradiating the ink having been introduced onto a surface of a glass panel with unpolarized light, and measuring total reflectance through spectrophotometry; and
a color difference $\Delta E^*_{ab}$ as defined by eq. (1) is 19 or less:

$$\Delta E^{*}_{ab} = [ (L_i^{*} - L_d^{*})^2 + (a_i^{*} - a_d^{*})^2 + (b_i^{*} - b_d^{*})^2 ]^{1/2} \qquad \ldots (1).$$

[Item 2]

The writing board set of Item 1, wherein,

the first polarizing layer is an absorptive polarizing layer; and
the writing board further includes
a reflective polarizing layer disposed between the diffuse reflection layer or diffuse reflection plate and the first polarizing layer, the reflective polarizing layer having a transmission axis that is substantially parallel to the first direction.

[Item 3]

The writing board set of Item 2, wherein,

the writing board further includes
a low-refractive index layer disposed between the diffuse reflection layer or diffuse reflection plate and the reflective polarizing layer, the low-refractive index layer having a refractive index smaller than a refractive index of the diffuse reflection layer or diffuse reflection plate.

[Item 4]

The writing board set of Item 3, wherein the low-refractive index layer has a refractive index of 1.30 or less.

[Item 5]

The writing board set of Item 3 or 4, wherein the low-refractive index layer comprises a porous layer.

[Item 6]

The writing board set of any one of Items 3 to 5, wherein the low-refractive index layer comprises an air layer.

[Item 7]

The writing board set of any one of Items 1 to 6, wherein $L_i^{*}$, $a_i^{*}$, and $b_i^{*}$ satisfy one of (a), (b), (c), and (d) :

$$22 \leqq L_i^{*} \leqq 27, \quad -1 \leqq a_i^{*} \leqq 3, \quad \text{and}, \quad -2 \leqq b_i^{*} \leqq 5 \qquad \ldots (a);$$

$$28 \leqq L_i^{*} \leqq 32, \quad -14 \leqq a_i^{*} \leqq -9, \quad \text{and}, \quad -5 \leqq b_i^{*} \leqq 3 \qquad \ldots (b);$$

$$23 \leqq L_i^{*} \leqq 27, \quad 0 \leqq a_i^{*} \leqq 6, \quad \text{and}, \quad -13 \leqq b_i^{*} \leqq -9 \qquad \ldots (c);$$

and

$$28 \leqq L_i^{*} \leqq 30, \quad 9 \leqq a_i^{*} \leqq 15, \quad \text{and}, \quad 0 \leqq b_i^{*} \leqq 5 \qquad \ldots (d).$$

[Item 8]

A writing board set comprising:

a writing board that includes

a reflective polarizing layer having a transmission axis which is orthogonal to a first direction,
a light diffusing layer to scatter visible light, the light diffusing layer being disposed on a viewer's side of the reflective polarizing layer, and
a light absorbing layer or a light absorbing plate to absorb visible light, the light absorbing layer or light absorbing plate being disposed an opposite side of the reflective polarizing layer from the viewer's side; and

a writing utensil containing ink, wherein,
$L_d^*$, $a_d^*$, and $b_d^*$ are values of $L^*$, $a^*$, and $b^*$ as obtained by irradiating a surface of the writing board at the viewer's side with light that has been transmitted through a second polarizing layer having a transmission axis which is orthogonal to the first direction, and measuring total reflectance through spectrophotometry;
$L_i^*$, $a_i^*$, and $b_i^*$ are values of $L^*$, $a^*$, and $b^*$ as obtained by irradiating the ink having been introduced onto a surface of a glass panel with unpolarized light, and measuring total reflectance through spectrophotometry; and
a color difference $\Delta E^*_{ab}$ as defined by eq. (1) is 19 or less:

$$\Delta E^*_{ab} = [\,(L_i^* - L_d^*)^2 + (a_i^* - a_d^*)^2 + (b_i^* - b_d^*)^2\,]^{1/2} \qquad \ldots (1).$$

[Item 9]

The writing board set of Item 8, wherein $L_i^*$ is 28 or more, $a_i^*$ is -14 or more, and $b_i^*$ is -4 or more.

[Item 10]

A writing board set comprising:

a writing board to reflect back, when unpolarized light is incident on a surface of the writing board at a viewer's side, polarized light which is parallel to a first direction and which has a degree of polarization of 95% or more; and
a writing utensil containing ink, wherein,
$L_d^*$, $a_d^*$, and $b_d^*$ are values of $L^*$, $a^*$, and $b^*$ as obtained by irradiating the surface of the writing board at the viewer's side with light that has been transmitted through a second polarizing layer having a transmission axis which is orthogonal to the first direction, and measuring total reflectance through spectrophotometry;
$L_i^*$, $a_i^*$, and $b_i^*$ are values of $L^*$, $a^*$, and $b^*$ as obtained by irradiating the ink having been introduced onto a surface of a glass panel with unpolarized light, and measuring total reflectance through spectrophotometry; and
a color difference $\Delta E^*_{ab}$ as defined by eq. (1) is 19 or less:

$$\Delta E^*_{ab} = [\,(L_i^* - L_d^*)^2 + (a_i^* - a_d^*)^2 + (b_i^* - b_d^*)^2\,]^{1/2} \qquad \ldots (1).$$

[Item 11]

A writing board set comprising:

a writing board that includes

a first polarizing layer having a transmission axis that is parallel to a first direction and
a diffuse reflection layer or a diffuse reflection plate to diffuse-reflect visible light, the diffuse reflection layer or diffuse reflection plate being disposed on an opposite side of the first polarizing layer from a viewer's side; and

a writing utensil containing ink, wherein,
$L_d^*$, $a_d^*$, and $b_d^*$ are values of $L^*$, $a^*$, and $b^*$ as obtained by irradiating a surface of the writing board at the viewer's side with light that has been transmitted through a second polarizing layer having a transmission axis which is orthogonal to the first direction, and measuring total reflectance through spectrophotometry;
$L_c^*$, $a_c^*$, and $b_c^*$ are values of $L^*$, $a^*$, and $b^*$ as obtained by introducing the ink onto the surface of the writing board at the viewer's side and irradiating the surface having the ink introduced thereon with light that has been transmitted through a second polarizing layer having a transmission axis which is orthogonal to the first direction, and measuring total reflectance through spectrophotometry; and
a color difference $\Delta E^*_{ab}$ as defined by eq. (2) is 12 or less:

$$\Delta E^*_{ab} = [ (L_c{}^* - L_d{}^*)^2 + (a_c{}^* - a_d{}^*)^2 + (b_c{}^* - b_d{}^*)^2 ]^{1/2} \quad \ldots (2).$$

[Item 12]

A peeking prevention system comprising:

the writing board set of any one of Items 1 to 11; and
a partition to delimit from the surroundings a space in which information displayed on the writing board of the writing board set is presented, the partition having a light-transmitting portion through which the inside of the space is viewable, wherein
the light-transmitting portion includes: a transparent substrate; and a polarizing layer having a transmission axis which is orthogonal to the first direction.

According to an embodiment of the present invention, a peeking prevention system and a writing board set that are able to sufficiently restrain information that is displayed with an ink on the surface of a writing board from being visible from outside of the space can be provided.

**BRIEF DESCRIPTION OF THE DRAWINGS**

FIG. **1A** is a schematic cross-sectional view of a writing board **100** included in a writing board set according to an embodiment of the present invention.
FIG. **1B** is a schematic cross-sectional view of a writing board **100a** included in a writing board set according to a modified example of an embodiment of the present invention.
FIG. **2** is a diagram schematically showing a peeking prevention systems **1000** that includes a writing board set according to an embodiment of the present invention.
FIG. **3A** is a schematic cross-sectional view for describing a method of evaluating a color difference $\Delta E^*_{ab}$.
FIG. **3B** is a schematic cross-sectional view for describing a method of evaluating a color difference $\Delta E^*_{ab}$.
FIG. **3C** is a schematic cross-sectional view for describing a method of evaluating a color difference $\Delta E^*_{ab}$.
FIG. **3D** is a schematic cross-sectional view for describing a method of evaluating a color difference $\Delta E^*_{ab}$.
FIG. **3E** is a schematic cross-sectional view for describing a method of evaluating a color difference $\Delta E^*_{ab}$.
FIG. **3F** is a schematic cross-sectional view for describing a method of evaluating a color difference $\Delta E^*_{ab}$.
FIG. **4A** is a schematic cross-sectional view of a writing board **101** included in a writing board set according to another embodiment of the present invention.
FIG. **4B** is a schematic cross-sectional view of a writing board **101a** included in a writing board set according to a modified example of another embodiment of the present invention.
FIG. **5** is a cross-sectional view schematically showing a ray trajectory at an interface between a diffuse reflection layer **40** and a low-refractive index layer **30.**
FIG. **6A** is a schematic cross-sectional view of a writing board **102** included in a writing board set according to still another embodiment of the present invention.
FIG. **6B** is a schematic cross-sectional view of a writing board **102a** included in a writing board set according to a modified example of still another embodiment of the present invention.
FIG. **7A** is a schematic cross-sectional view of a writing board **103** included in a writing board set according to still another embodiment of the present invention.
FIG. **7B** is a schematic cross-sectional view of a writing board **103a** included in a writing board set according to a modified example of still another embodiment of the present invention.
FIG. **8** is a schematic cross-sectional view showing an example structure of reflective polarizing layers **10** and **11.**
FIG. **9A** is a diagram showing evaluation results for writing boards according to Examples and Comparative Examples.
FIG. **9B** is a diagram showing evaluation results for writing boards according to Examples and Comparative Examples.

**DETAILED DESCRIPTION**

Hereinafter, a writing board set and a peeking prevention system according to an embodiment of the present invention will be described. Embodiments of the present invention are not limited what will be illustrated below.

A writing board set according to an embodiment of the present invention includes a writing board and a writing utensil containing ink. When unpolarized light is incident on a surface of the writing board at the viewer's side, the writing board reflects back polarized light which is parallel to the first direction and which has a degree of polarization of 950 or more. The writing board includes a polarizing layer (first polarizing layer) having a transmission axis that is parallel to the first direction, for example. By drawing text characters, symbols, diagrams, drawings, etc., on the surface of the writing board at the viewer's side with the ink of the writing utensil, information can be displayed on the surface of the writing board. As will be illustrated later by several example configurations for the writing board, the writing board may be a whiteboard or a blackboard, for example. However, the writing board included in a writing board set according to an embodiment of the present invention is not limited to those which appear white or black. Moreover, instead of a first polarizing layer having a transmission axis that is parallel to the first direction, the writing board may include: a reflective polarizing layer having a transmission axis which is orthogonal to the first direction; and a light absorbing layer or a light absorbing plate to absorb visible light, the light absorbing layer or light absorbing plate being disposed on an opposite side of the reflective polarizing layer from the viewer's side. The configuration of the writing board will be described in detail later.

A peeking prevention system according to an embodiment of the present invention includes: a writing board set; and a partition to delimit from the surroundings a space in which information displayed on the writing board of the writing board set is presented, the partition having a light-transmitting portion through which the inside of the space is viewable. The light-transmitting portion includes: a transparent substrate; and a polarizing layer having a transmission axis which is orthogonal to the first direction.

The inventors have found that, when the writing board and the ink of the writing utensil satisfy a predetermined relationship, information that is displayed with the ink on the surface of the writing board can be sufficiently restrained from being visible from outside of the space.

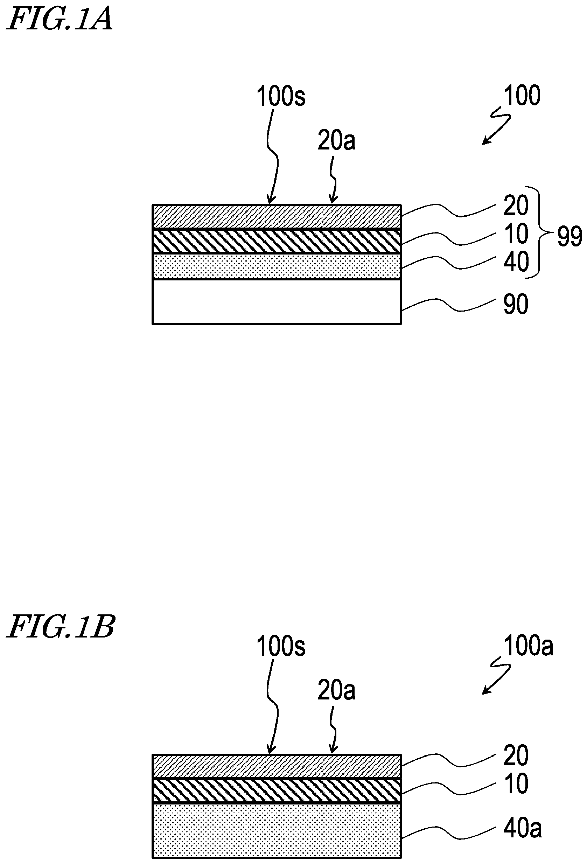

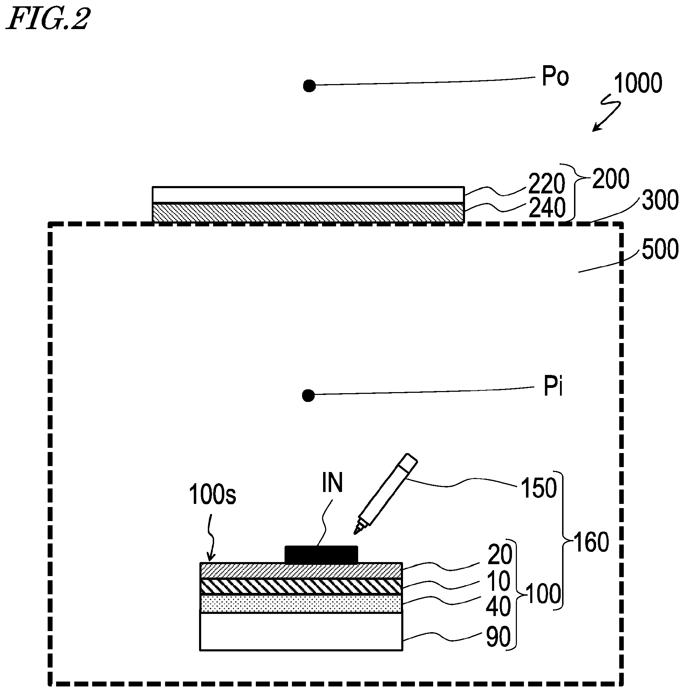

With reference to FIG. **1A** and FIG. **2**, a writing board set and a peeking prevention system according to an embodiment of the present invention will be described.

FIG. **1A** shows a schematic cross-sectional view of a writing board **100** included in a writing board set according to an embodiment of the present invention. The writing board **100** may be a whiteboard. As a first polarizing layer having a transmission axis that is parallel to the first direction, the writing board **100** includes the absorptive polarizing layer **20.** The writing board **100** further includes: a diffuse reflection layer **40** to diffuse-reflect visible light, the diffuse reflection layer **40** being disposed on the opposite side of the absorptive polarizing layer **20** from the viewer's side; and a reflective polarizing layer **10** disposed between the diffuse reflection layer **40** and the absorptive polarizing layer **20.** The transmission axis of the reflective polarizing layer **10** is disposed substantially parallel to the transmission axis of the absorptive polarizing layer **20,** i.e., substantially parallel to the first direction. The reflective polarizing layer **10** transmits polarized light that is parallel to the transmission axis, and reflects polarized light that is orthogonal to the transmission axis. When it is said that the transmission axis of the absorptive polarizing layer **20** and the transmission axis of the reflective polarizing layer **10** are substantially parallel, this is meant to encompass the case where the angle made by the transmission axis of the absorptive polarizing layer **20** and the transmission axis of the reflective polarizing layer **10** has a margin of error within $\pm 5°$ of $0°$. Example configurations of the absorptive polarizing layer **20,** the diffuse reflection layer **40,** and the reflective polarizing layer **10** will be described later. The diffuse reflection layer **40** is supported by the base **90.** When the writing board **100** is referred to as a "whiteboard", it is not limited to only those whose surface **100s** at the viewer's side appears white; rather, the surface **100s** of the writing board **100** at the viewer's side may be gray, for example. While the diffuse reflection layer **40** itself may be white, because the writing board **100** also includes the absorptive polarizing layer **20** and the reflective polarizing layer **10** on the viewer's side, the surface **100s** of the writing board **100** at the viewer's side may appear gray.

The writing board set **160** (FIG. **2**) includes the writing board **100** and a writing utensil (e.g., a marker) **150** (FIG. **2**) containing ink. The surface **100s** of the writing board **100** at the viewer's side has a configuration such that text characters, symbols, diagrams, drawings, etc., can be drawn thereon with the ink of the writing utensil **150.** In other words, with an ink layer(s) **IN** that is formed by the ink of the writing utensil **150** (FIG. **2**), information such as text characters, symbols, diagrams, drawings, etc., is displayed on the surface **100s** of the writing board **100** at the viewer's side. The shape(s) of the ink layer(s) **IN** as viewed from the normal direction of the surface **100s** of the writing board **100** corresponds to the text character(s), symbol(s), diagram(s), drawing(s), etc. The ink of the writing utensil **150** contains a pigment or dyestuff. Preferably, the surface **100s** of the writing board **100** at the viewer's side has a configuration such that text characters or the like drawn with the ink of the writing utensil **150** are erasable. For example, on the surface **20a** of the absorptive polarizing layer **20,** a protection layer (e.g., glass) may further be provided. Alternatively, on the surface **20a** of the absorptive polarizing layer **20,** an anti-soiling layer made of an acrylate-containing resin, a urethane-containing resin, a fluorine-containing resin, or a silicone-containing resin may further be provided. By using an ink that is appropriately adjusted with a solvent, a resin, a release agent, or the like, text characters or the like drawn on the surface **100s** can be easily erased through physical rubbing with an eraser (i.e., thus being capable of being written or erased). The surface **100s** of the writing board **100** may be just flat enough to allow text characters or the like to be written or erased. In the illustrated case, the surface **100s** of the writing board **100** is the surface **20a** of the absorptive polarizing layer **20;** in the case where the aforementioned protection layer or anti-soiling layer is provided, the surface **100s** of the writing board **100** is the surface of the protection layer or anti-soiling layer.

The diffuse reflection layer **40** is supported by the base **90.** The remainder of the writing board **100** other than the base **90** may be referred to as a writing board film (or a whiteboard film). The writing board film **99** includes: an absorptive polarizing layer **20** having a transmission axis that is parallel to the first direction; a diffuse reflection layer **40** to diffuse-reflect visible light, the diffuse reflection layer **40** being disposed on the opposite side of the absorptive polarizing layer **20** from the viewer's side; and a reflective polarizing layer **10** disposed between the diffuse reflection layer **40** and the absorptive polarizing layer **20.** By being attached to the base **90,** the writing board film **99** may constitute the writing board **100.** The method for attaching the writing board film **99** onto the base **90** is not particularly limited; for example, it may be bonded by using an adhesive, or attached by using a magnet. An "adhesive" is inclusive of a tackiness agent (also called "pressure-sensitive adhesive"). The writing board film **99** may be fixed on, or removably attached to, the base **90.** The base **90** supports the writing board film **99** so that the surface **100s** of the writing board **100** is essentially parallel to the vertical direction, for example.

FIG. **1B** shows a schematic cross-sectional view of writing board **100a** as a modified example of the writing board **100.** The writing board **100a** differs from the writing board **100** in that the writing board **100a** includes a diffuse reflection plate **40a** to diffuse-reflect visible light instead of the diffuse reflection layer **40** and the base **90** included in the writing board **100.** The writing board **100a** can be used without being supported on a base.

In the present specification, a "diffuse reflection plate" refers to that which requires no supporting base, whereas a "diffuse reflection layer" refers to that which is commonly used in a state of being supported on a base, or that which cannot exist without a supporting base. A diffuse reflection layer and a base supporting the diffuse reflection layer may together be referred to as a diffuse reflection plate. The diffuse reflection layer and the base may monolithically (i.e., without a clear boundary existing between the diffuse reflection layer and the base) compose the diffuse reflection plate. However, this is not to exclude implementations where a diffuse reflection plate is being supported on a base. Although the writing board **100** will be described as an example, similar effects to those attained by the writing board **100** can also be obtained by using the writing board **100a** instead of the writing board **100,** unless otherwise specified.

FIG. **2** is a diagram schematically showing a peeking prevention system **1000** that includes the writing board set **160,** as viewed from above. As shown in FIG. **2,** the peeking prevention system **1000** includes: the writing board set **160,** which includes the writing board **100** and the writing utensil **150;** and a partition **300** to delimit from the surroundings a space **500** in which information displayed on the writing board **100** is to be presented, the partition **300** having a light-transmitting portion **200** through which the inside of the space **500** is viewable. The light-transmitting portion **200** includes: a transparent substrate **220;** and a polarizing layer (absorptive polarizing layer) **240** having a transmission axis which is orthogonal to the first direction.

Information that is displayed on the writing board **100,** e.g., information such as text characters, symbols, diagrams, drawings, etc., drawn with black ink on the surface **100s** of the writing board **100** at the viewer's side, is presented to a viewer **Pi** in the space **500** in the following manner. Within the external light or illumination light (unpolarized light) that is incident on the writing board **100,** any polarized light which is parallel to the transmission axis of the absorptive polarizing layer **20** and the transmission axis of the reflective polarizing layer **10** (i.e., polarized light which is parallel to the first direction) is transmitted through the absorptive polarizing layer **20** and the reflective polarizing layer **10,** and diffuse-reflected at the surface and/or the interior of the diffuse reflection layer **40.** Within the light that is diffuse-reflected by the diffuse reflection layer **40,** any polarized light which is parallel to the transmission axis of the absorptive polarizing layer **20** and the transmission axis of the reflective polarizing layer **10** is consecutively transmitted through the reflective polarizing layer **10** and the absorptive polarizing layer **20,** so as to reach the viewer. The places where nothing is drawn on the surface **100s** (i.e., places where no ink layers **IN** exist) appear in the color of the surface **100s** of the writing board **100** (e.g., white). On the other hand, any place where a text character or the like is drawn on the surface **100s** with black ink (i.e., any place where an ink layer **IN** exists) appears in the color of the ink layer **IN** (i.e., black), because all wavelength components of external light or illumination light (unpolarized light) that is incident on the ink layer **IN** are absorbed by the pigment or dyestuff contained in the ink. Because of the color difference between the color (black) of the ink layer(s) **IN** and the color (e.g., white) of the surface **100s** of the writing board **100,** the viewer **Pi** in the space **500** is able to recognize the outer contour of the ink layer(s) **IN**, whereby information of the text character(s) or the like drawn with ink is presented to the viewer **Pi** in the space **500.**

On the other hand, a person **Po** who is outside the space **500** cannot see the information of the text characters, symbols, diagrams, drawings, etc., that are drawn with black ink on the surface **100s** of the writing board **100** at the viewer's side. Any polarized light emitted from the surface **100s** of the writing board **100** that is parallel to the first direction cannot be transmitted through the polarizing layer **240** having a transmission axis which is orthogonal to the first direction; therefore, the surface **100s** of the writing board **100** appears black to the person **Po** who is outside the space **500.** As a result, when observed through the polarizing layer **240,** the hue of the surface **100s** of the writing board **100** is identical to the hue of the ink layer (s) **IN,** so that the person **Po** who is outside the space **500** is basically blinded from the displayed information. Even if the angle between the transmission axis of the absorptive polarizing layer **20** and the transmission axis of the polarizing layer **420** is not 90°, while the margin of error from 90° is within ± 10°, it is possible to obtain an effect of blinding the person **Po** who is outside the space **500** from the information displayed on the writing board **100** as the person **Po** views the writing board **100** through the polarizing layer **420** of the light-transmitting portion **200**.

The case of using an ink of a non-black color (e.g., green, blue, or red) will be described. When text characters, symbols, diagrams, drawings, etc., are drawn on the surface **100s** of the writing board **100** at the viewer's side with a non-black (e.g., green, blue, or red) ink, a specific wavelength component(s) of external light or illumination light (unpolarized light) that is incident on the ink layer (s) **IN** is absorbed by the pigment or dyestuff contained in the ink, while the wavelength components of the light that were not absorbed by the pigment or dyestuff in the ink are reflected. As a result, each ink layer **IN** exhibits the color of its own ink, whereby information of the text characters or the like drawn on the surface **100s** of the writing board **100** is presented to the viewer **Pi** in the space **500**. Within the light that goes out from the ink layer **IN** of each color (unpolarized light), only the polarized light which is parallel to the transmission axis of the polarizing layer **240** is presented to the person **Po** who is outside the space **500**. It has been found that, information displayed on the writing board **100** may still remain visible to the person **Po** who is outside the space **500** depending on the combination of the color of the ink and the color of the surface **100s** of the writing board **100**.

The inventors have found that, when the writing board **100** and the ink of the writing utensil satisfy the following relationship, information that is displayed with an ink on the surface **100s** of the writing board **100** can be sufficiently restrained from being visible from outside of the space **500**. When a color difference $\Delta E^*_{ab}$ of the L*a*b* color system as defined by eq. (1) below is 19 or less, information that is displayed with the ink on the surface of the writing board can be sufficiently restrained from being visible from outside of the space.

$$\Delta E^*_{ab} = [(L_i^* - L_d^*)^2 + (a_i^* - a_d^*)^2 + (b_i^* - b_d^*)^2]^{1/2} \quad \quad \dots (1)$$

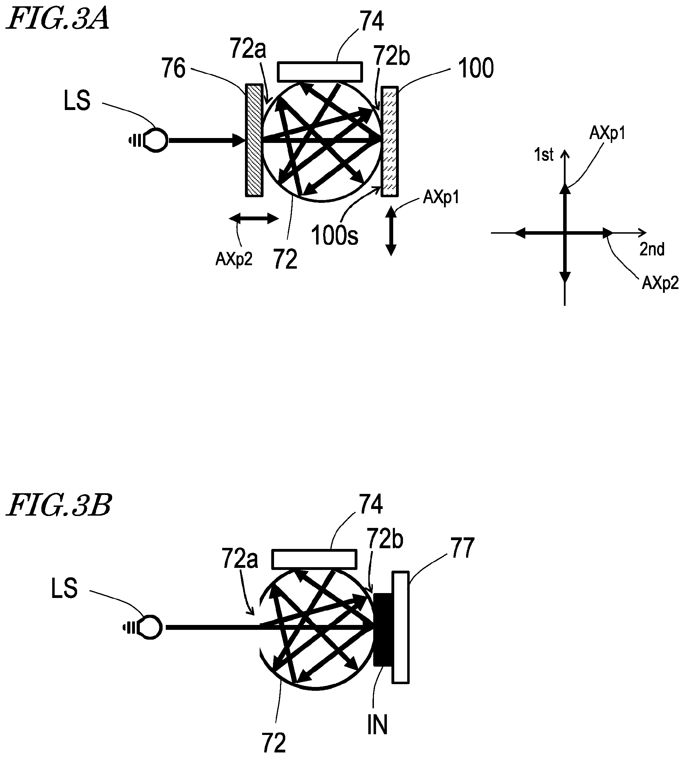

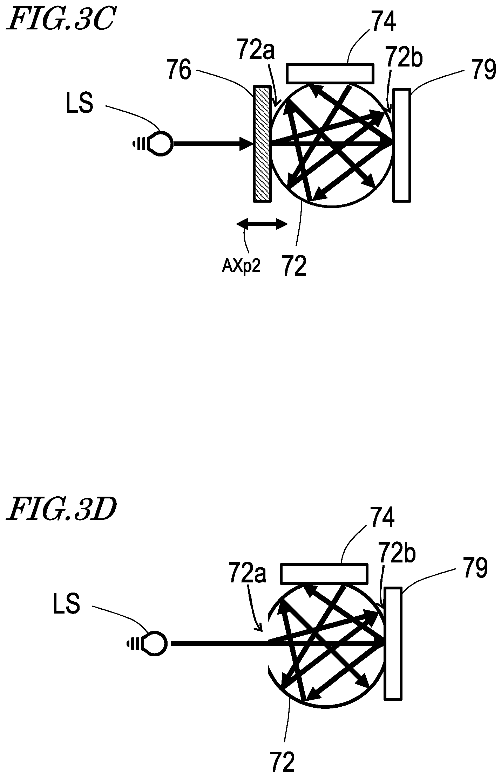

With reference to FIG. **3A**, FIG. **3B**, FIG. **3C**, and FIG. **3D**, it will be described how the color difference $\Delta E^*_{ab}$ as defined by eq. (1) is determined. FIG. **3A**, FIG. **3B**, FIG. **3C**, and FIG. **3D** are schematic diagrams for describing a manner of determining the color difference $\Delta E^*_{ab}$ as defined by eq. (1), each being a cross-sectional view as viewed from a lateral direction. As is schematically in FIG. **3A**, $L_d^*$, $a_d^*$, and $b_d^*$ in eq. (1) are values of L*, a*, and b* as obtained by irradiating the surface **100s** of the writing board **100** at the viewer's side with light that has been transmitted through a polarizing layer (second polarizing layer) **76** having a transmission axis **AXp2** which is parallel to a second direction that is orthogonal to the first direction, and measuring total reflectance through spectrophotometry. As described earlier, the writing board **100** includes the absorptive polarizing layer **20** and the reflective polarizing layer **10** having a transmission axis **AXp1** that is parallel to the first direction. The polarizing layer (absorptive polarizing layer) **76** is placed at an opening **72a** of an integrating sphere **72**. Within unpolarized light emitted from a light source **LS,** light that is transmitted through the polarizing layer **76** is radiated onto the surface **100s** of the writing board **100** at the viewer's side, this writing board **100** being placed at an opening **72b** of the integrating sphere **72**. Then, light that has been reflected in all directions is integrated and received by a detector **74**. The angle that the optical axis of light that is emitted from the light source **LS** makes with the normal direction of the surface **100s** of the writing board **100** at the viewer's side (i.e., the incident angle) is 8°. The polarizing layer **76** is disposed so that the normal direction of the polarizing layer **76** is parallel to the optical axis of light being emitted from the light source **LS.** Using a UV-Vis-NIR Spectrophotometer named UH4150 (manufactured by Hitachi High-Tech Corporation) as a spectrophotometer, L*, a*, and b* were determined by measuring total reflectance. As for the total reflectance on the surface **100s** of the writing board **100** at the viewer's side, the polarizing layer (absorptive polarizing layer) **76** was placed at the opening **72a** of the integrating sphere **72,** and a ratio (relative reflectance) against the amount of light to be reflected by a reference sample **79,** which was a white reflectance standard (barium sulfate), was determined. Total reflectance measurement for the reference sample **79** was taken by, as shown in FIG. **3C**, placing the polarizing layer (absorptive polarizing layer) **76** at the opening **72a** of the integrating sphere **72,** and placing the reference sample **79** at the opening **72b** of the integrating sphere **72**. The total reflectance measurements were taken at intervals of 5 nm across the wavelength range from 380 nm to 780 nm, and the resultant measurements were multiplied by a weighting coefficient that was obtained from a C light source spectrum and a wavelength distribution of luminosity factor values in a 2-degree field of view, and arithmetic mean of them was taken, whereby a total reflectance (Y value) was determined.

$L_i^*$, $a_i^*$, and $b_i^*$ in eq. (1) are, as is schematically illustrated by FIG. **3B,** values of L*, a*, and b* as obtained by introducing ink onto the surface of the glass panel **77** (manufactured by Matsunami Glass Ind., Ltd., product number S9111, microscope slide (crown glass), thickness 1 mm) to form an ink layer **IN,** irradiating the ink layer **IN** with unpolarized light from the light source **LS,** and measuring total reflectance with a spectrophotometer by a method similar to the method described with reference to FIG. **3A.** As for the total reflectance, a ratio (relative reflectance) against the amount of light to be reflected by a reference sample **79,** which was a white reflectance standard (barium sulfate), was determined.

Total reflectance measurement for the reference sample **79** was taken by, as shown in FIG. **3D,** without placing any polarizing layer at the opening **72a** of the integrating sphere **72,** unlike in the method described with reference to FIG. **3C.** The ink layer **IN** was formed by painting an essentially quadrangular shape having an area of about 50 cm² to 100 cm² on the surface of the glass panel **77** with the ink of the writing utensil. In order to ensure equal conditions, no double coating (overlaying) was performed. As the glass panel **77,** without being limited to what was mentioned above, a colorless and transparent glass panel (including crown glass and float glass) can be used. For example, a microscope slide made of crown glass may be used. Alternatively, without being limited to a microscope slide, a glass panel made of less bluish glass (e.g., borosilicate glass) called crown glass or high-transmission glass may be used as the glass panel **77.** Although the thickness of the glass panel **77** is not particularly limited, it may be e.g. 0.5 mm to 2 mm. By using the aforementioned glass panel **77** with a glass panel being made of soda-lime glass (float glass) and having a thickness of 1 mm and a glass panel made of soda-lime glass and having a thickness of 2 mm, the inventors have confirmed that no significant differences existed between these glass panels. For each of these three glass panels, total reflectance and $L_i^*$, $a_i^*$, and $b_i^*$ of the glass panel having the ink layer **IN** formed on its surface was measured, whereby it was confirmed that no major discrepancies existed among them depending on the type or thickness of the glass panel. As for the total reflectance on the surface of each glass panel without any ink introduced thereon, there was no major discrepancies among the three glass panels.

$L_d^*$, $a_d^*$, and $b_d^*$ were used as indices representing the reflectance hue of the surface **100s** of the writing board **100** at the viewer's side, as observed from outside of the space **500** through the polarizing layer **240** of the light-transmitting portion **200.** A reflectance hue that results when light transmitted through a polarizing layer having a transmission axis that is orthogonal to the first direction (i.e., a direction that is parallel to the transmission axis **AXp1** of the absorptive polarizing layer **20** and the reflective polarizing layer **10** of the writing board **100)** may be referred to as a "cross-reflectance hue". $L_i^*$, $a_i^*$, and $b_i^*$ were used as indices representing the reflectance hue of the ink. By using $L_d^*$, $a_d^*$, and $b_d^*$, and $L_i^*$, $a_i^*$, and $b_i^*$, the inventors have attempted evaluating a color difference between the cross-reflectance hue of the writing board **100** and the reflectance hue of the ink. Thus, it was found that information that is displayed with the ink on the surface of the writing board can be sufficiently restrained from being visible from outside of the space when the color difference $\Delta E^*_{ab}$ as defined by eq. (1) is equal to or less than a predetermined value (or specifically, 19 or less).

The evaluation results using the color difference $\Delta E^*_{ab}$ as defined by eq. (1) also matched those of another method of evaluation. When a color difference $\Delta E^*_{ab}$ of the L*a*b* color system as defined by eq. (2) below is **12** or less, information that is displayed with the ink on the surface of the writing board can be sufficiently restrained from being visible from outside of the space.

$$\Delta E^*_{ab} = [ (L_c^* - L_d^*)^2 + (a_c^* - a_d^*)^2 + (b_c^* - b_d^*)^2 ]^{1/2} \qquad \ldots (2)$$

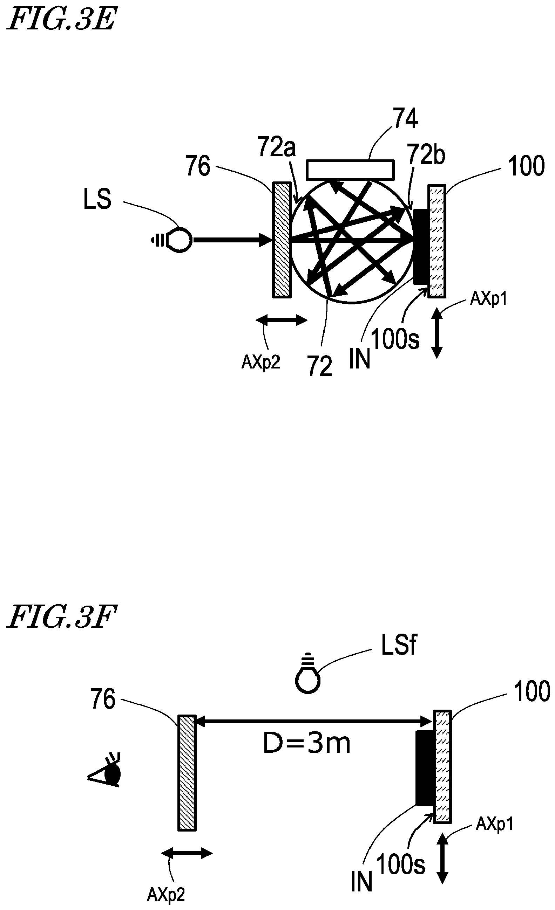

$L_d^*$, $a_d^*$, and $b_d^*$ in eq. (2) are identical to those in eq. (1). FIG. **3E** is a schematic diagram for describing a manner of determining the color difference $\Delta E^*_{ab}$ as defined by eq. (2), being a cross-sectional view as viewed from a lateral direction. As is schematically shown in FIG. **3E,** $L_c^*$, $a_d^*$, and $b_c^*$ as defined by eq. (2) are values of L*, a*, and b* as obtained by forming an ink layer **IN** by introducing ink onto the surface **100s** of the writing board **100** at the viewer's side, irradiating the surface **100s** having the ink layer **IN** thereon with light that has been transmitted through a polarizing layer (second polarizing layer) **76** having a transmission axis **AXp2** which is parallel to a second direction that is orthogonal to the first direction, and measuring total reflectance through spectrophotometry by a method similar to the method described with reference to FIG. **3A.** As for the total reflectance on the surface **100s** having the ink layer **IN** thereon, the polarizing layer (absorptive polarizing layer) **76** was placed at the opening **72a** of the integrating sphere **72,** and a ratio (relative reflectance) against the amount of light to be reflected by a reference sample **79,** which was a white reflectance standard (barium sulfate), was determined. Total reflectance measurements for the reference sample **79** was taken by, as has been described with reference to FIG. **3C,** placing the polarizing layer (absorptive polarizing layer) **76** at the opening **72a** of the integrating sphere **72,** and placing the reference sample **79** at the opening **72b** of the integrating sphere **72.**

As will be illustrated by evaluation results using writing board sets according to Examples and Comparative Examples, the evaluations made by using the color difference $\Delta E^*_{ab}$ as defined by eq. (1) and the evaluations made by using the color difference $\Delta E^*_{ab}$ as defined by eq. (2) also matched subjective evaluations that were made by visual inspection. As schematically in FIG. **3F,** the subjective evaluation by visual inspection involved, after introducing ink onto the surface **100s** of the writing board **100** at the viewer's side to form an ink layer **IN,** observing the surface **100s** of the writing board **100** at the viewer's side by visual inspection, through the polarizing layer **76** being disposed at a distance **D** (D=3 m) from the surface **100s** in a room in which a fluorescent lamp **LSf** was placed. The degree to which the ink layer **IN** was visible was evaluated in four steps from 0 to 3 below. Note that the surface **100s** of the writing board **100** at the viewer's side and a principal face of the polarizing layer **76** were placed substantially parallel.

0: Cannot be seen
1: Hard to see
2: visible
3: Easily seen

It is defined that, when "0" or "1", information that is displayed with the ink on the surface of the writing board can be sufficiently restrained from being visible from outside of the space.

Regarding evaluation made by using the color difference $\Delta E^*_{ab}$ as defined by eq. (1), $L_i^*$, $a_i^*$, and $b_i^*$ preferably satisfy one of ranges as defined by (a), (b), (c), and (d) below.

$$22 \leq L_i^* \leq 27, \quad -1 \leq a_i^* \leq 3, \quad \text{and,} \quad -2 \leq b_i^* \leq 5 \quad \ldots (a)$$

$$28 \leq L_i^* \leq 32, \quad -14 \leq a_i^* \leq -9, \quad \text{and,} \quad -5 \leq b_i^* \leq 3 \quad \ldots (b)$$

$$23 \leq L_i^* \leq 27, \quad 0 \leq a_i^* \leq 6, \quad \text{and,} \quad -13 \leq b_i^* \leq -9 \quad \ldots (c)$$

$$28 \leq L_i^* \leq 30, \quad 9 \leq a_i^* \leq 15, \quad \text{and,} \quad 0 \leq b_i^* \leq 5 \quad \ldots (d)$$

For example, $L_i^*$, $a_i^*$, and $b_i^*$ values satisfying range (a) may correspond to a black ink; $L_i^*$, $a_i^*$, and $b_i^*$ values satisfying range (b) may correspond to a green ink; $L_i^*$, $a_i^*$, and $b_i^*$ values satisfying range (c) may correspond to a blue ink; and $L_i^*$, $a_i^*$, and $b_i^*$ values satisfying range (d) may correspond to a red ink. In the case where an ink whose $L_i^*$, $a_i^*$, and $b_i^*$ satisfy one of ranges (a), (b), (c), and (d) is used, a writing board may be used that includes: a first polarizing layer having a transmission axis that is parallel to the first direction; and a diffuse reflection layer or a diffuse reflection plate to diffuse-reflect visible light, the diffuse reflection layer or diffuse reflection plate being disposed on the opposite side of the first polarizing layer from the viewer's side. In the case where an ink whose $L_i^*$, $a_i^*$, and $b_i^*$ satisfy one of ranges (a), (b), (c), and (d) is used, a total reflectance value obtained by irradiating the surface of the writing board at the viewer's side with light that has been transmitted through a second polarizing layer having a transmission axis which is orthogonal to the first direction, and measured through spectrophotometry is 4.80 or less, for example. As for the total reflectance (as has been described with reference to FIG. **3A** and FIG. **3C**), the polarizing layer (absorptive polarizing layer) **76** was placed at the opening **72a** of the integrating sphere **72,** and a ratio (relative reflectance) against the amount of light to be reflected by a reference sample **79,** which was a white reflectance standard (barium sulfate), was determined.

Because the writing board **100** includes the reflective polarizing layer **10** between the diffuse reflection layer **40** and the absorptive polarizing layer **20,** the efficiency of light utilization can be improved, as will be described below. Because of the improved efficiency of light utilization, the writing board **100** allows for improving the visibility of the displayed information. Within the light that is diffuse-reflected at the surface and/or the interior of the diffuse reflection layer **40,** the polarized light that is orthogonal to the transmission axis of the reflective polarizing layer **10** is reflected by the reflective polarizing layer **10,** so as to be again incident on and diffuse-reflected by the diffuse reflection layer **40,** whereby its degree of polarization is lowered (depolarized). Within the light that is diffuse-reflected by the diffuse reflection layer **40,** the polarized light which is parallel to the transmission axis of the absorptive polarizing layer **20** and the transmission axis of the reflective polarizing layer **10** is transmitted through the reflective polarizing layer **10** and the absorptive polarizing layer **20,** while the polarized light which is orthogonal to the transmission axis of the reflective polarizing layer **10** is reflected by the reflective polarizing layer **10** so as to be again incident on and diffuse-reflected by the diffuse reflection layer **40,** and this process is repeated; as a result, an improved efficiency of light utilization is provided. Because the writing board **100** can provide an improved luminance, the visibility of displayed information can be improved.

Because the writing board **100** includes the absorptive polarizing layer **20** at the front surface (i.e., the viewer's side), there is an advantage in that influences of reflection of external light can be reduced. Moreover, in general, the degree of polarization of the reflective polarizing layer **10** is lower than the degree of polarization of the absorptive polarizing layer **20**; therefore, inclusion of the absorptive polarizing layer **20** in addition to the reflective polarizing layer **10** provides better obscuring of the information displayed on the writing board **100** for the person **Po** who is outside the space **500** (blinding).

The Applicant's International Publication No. 2021/200722 discloses a peeking prevention system that can prevent peeking from oblique directions. The entire disclosure of International Publication No. 2021/200722 is incorporated herein by reference.

The writing board **100** may include adhesion layers, each between the diffuse reflection layer **40** and the reflective polarizing layer **10** and between the reflective polarizing layer **10** and the absorptive polarizing layer **20** independently.

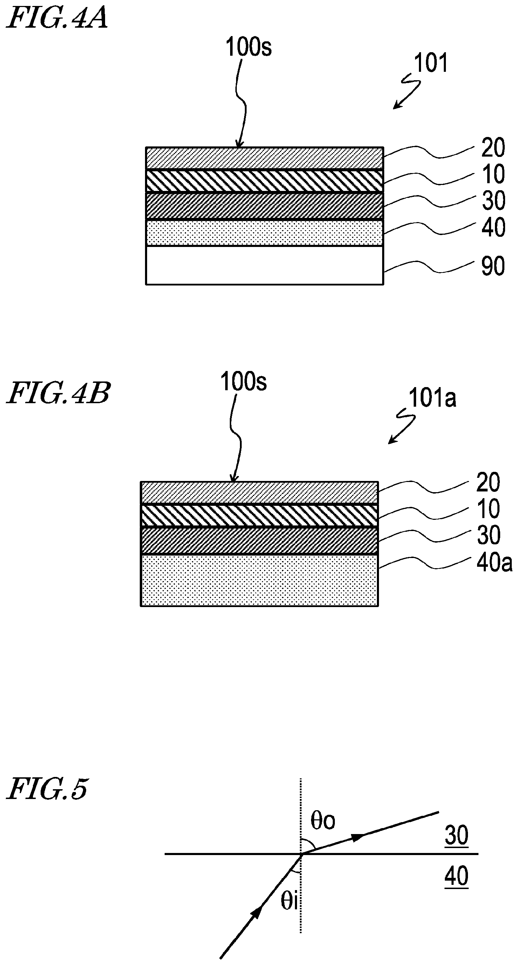

FIG. **4A** shows a schematic cross-sectional view of a writing board 101 according to another embodiment of the present invention.

As shown in FIG. **4A,** the writing board **101** differs from the writing board **100** in that a low-refractive index layer **30** disposed between the diffuse reflection layer **40** and the reflective polarizing layer **10** is further provided. Differences from the writing board **100** will mainly be described.

The low-refractive index layer **30** has a smaller refractive index than that of the diffuse reflection layer **40**. The low-refractive index layer **30,** which is transparent with respect to visible light, is made of a light-transmitting material. The refractive index of the low-refractive index layer **30** is preferably 1.30 or less, for example. The low-refractive index layer **30** may be an air layer. Alternatively, the low-refractive index layer **30** may be a porous layer described later. The low-refractive index layer **30** may be made of an adhesive (e.g., an adhesive having a refractive index of not less than 1.4 and not more than 1.6) .

Also when the writing board **100** of the peeking prevention system **1000** is replaced by the writing board **101,** by using an ink that satisfies eq. (1), information displayed on the writing board **101** can be sufficiently restrained from being visible from outside of the space **500**.

As will be described below, because of including the low-refractive index layer **30,** the writing board **101** allows the utilization efficiency of light that is diffuse-reflected inside the diffuse reflection layer **40** to be improved; as a result, a further improved efficiency of light utilization is provided over the writing board **100**.

Because the refractive index of the low-refractive index layer **30** is smaller than the refractive index of the diffuse reflection layer **40,** within the light that is diffuse-reflected inside the diffuse reflection layer **40,** light which is incident on the low-refractive index layer **30** at an angle which is equal to the critical angle or greater undergoes total reflection (total internal reflection) at the interface between the diffuse reflection layer **40** and the low-refractive index layer **30.** A portion of light having an incident angle $\theta_i$ which is smaller than the critical angle enters the low-refractive index layer **30.** Within the light that enters the low-refractive index layer **30,** light having a large outgoing angle $\theta_o$ from the diffuse reflection layer **40** to the low-refractive index layer **30,** e.g., as shown in FIG. **5,** may leak at the end of the low-refractive index layer **30,** possibly resulting in a loss of light. When the critical angle is small, a large portion of light undergoes total reflection, whereby the aforementioned loss of light can be suppressed. From the standpoint of improving the efficiency of light utilization, the critical angle is preferably small; therefore, a ratio nl/nr of the refractive index nl of the low-refractive index layer **30** to the refractive index nr of the diffuse reflection layer **40** is preferably small. For example, in the case where the diffuse reflection layer **40** is made of polyvinyl chloride (nr=1.56) and the low-refractive index layer **30** is made of an acrylic adhesive (nl=1.48), nl/nr=0.949, and the critical angle is 72°. For the same diffuse reflection layer **40** (nr=1.56), if the low-refractive index layer **30** is an air layer (nl=1.00), then nl/nr=0.641, and the critical angle is 40°.

In the illustrated example, the low-refractive index layer **30** is directly formed on the surface of the reflective polarizing layer **10;** that is, the low-refractive index layer **30** is directly in contact with the reflective polarizing layer **10.** Without being limited to this example, a writing board according to an embodiment of the present invention may include a further layer that is transparent with respect to visible light (e.g., an acrylic resin or PET film) between the low-refractive index layer **30** and the reflective polarizing layer **10.**

Similarly to the writing board **100,** by including the reflective polarizing layer **10** between the diffuse reflection layer **40** and the absorptive polarizing layer **20,** the writing board **101** provides an improved efficiency of light utilization. The writing board **101** allows the visibility of displayed information to be improved.

FIG. **4B** shows a schematic cross-sectional view of a writing board **101a** included in a writing board set according to another embodiment of the present invention. The writing board **101a** differs from the writing board **101** in that, instead of the diffuse reflection layer **40** and the base **90** included in the writing board **101,** a diffuse reflection plate **40a** to diffuse-reflect visible light is included. The writing board **101a** can be used without being supported on a base.

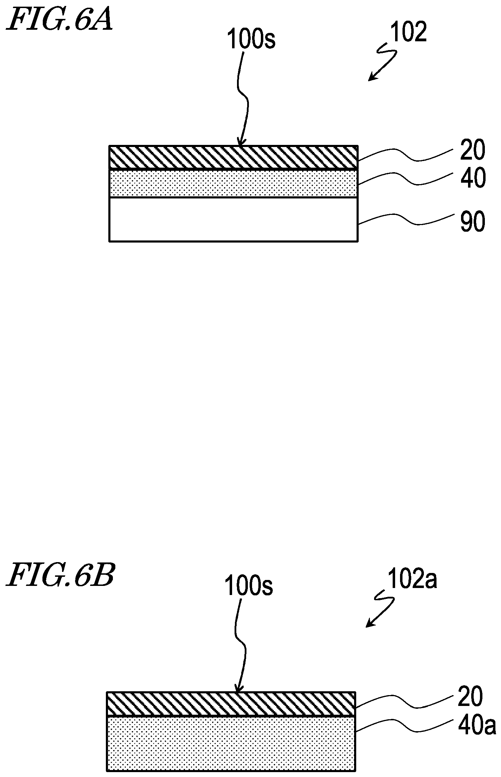

FIG. **6A** shows a schematic cross-sectional view of a writing board **102** included in a writing board set according to another embodiment of the present invention.

The writing board **102** differs from the writing board **100** in that the reflective polarizing layer **10** is not included. From the standpoint of the efficiency of light utilization, the writing board **102** may be inferior to the writing board **100,** which includes the reflective polarizing layer **10.** However, also when the writing board **100** of the peeking prevention system **1000** is replaced by the writing board **102,** by using an ink that satisfies eq. (1), information displayed on the writing board **102** can be sufficiently restrained from being visible from outside of the space **500.**

FIG. **6B** shows a schematic cross-sectional view of a writing board **102a** included in a writing board set according to another embodiment of the present invention.

The writing board **102a** differs from the writing board **102** in that, instead of the diffuse reflection layer **40** and the base **90** included in the writing board **102,** a diffuse reflection plate **40a** to diffuse-reflect visible light is included. The writing board **102a** can be used without being supported on a base.

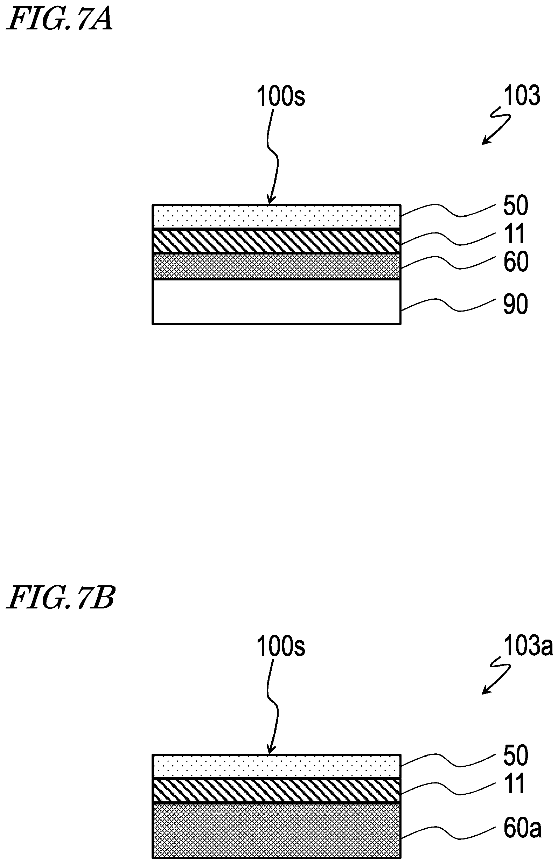

FIG. **7A** shows a schematic cross-sectional view of a writing board **103** included in a writing board set according to another embodiment of the present invention.

The writing board **103** includes: a reflective polarizing layer **11** having a transmission axis which is orthogonal to the first direction; a light absorbing layer **60** to absorb visible light, the light absorbing layer **60** being disposed on an opposite side of the reflective polarizing layer **11** from the viewer's side; and a light diffusing layer **50** to scatter visible light, the light diffusing layer **50** being disposed on the viewer's side of the reflective polarizing layer **11**. When unpolarized light is incident on the surface **100s** of the writing board **103** at the viewer's side, polarized light which is parallel to the first direction is reflected back. The degree of polarization of the polarized light which is parallel to the first direction is preferably 950 or more.

The light diffusing layer **50** has a surface with bump/dent features to diffuse-reflect visible light, for example. The light diffusing layer **50** may be made of a resin composition containing microparticles such as zirconium oxide microparticles or silica microparticles dispersed in a resin. The light diffusing layer **50** is light-transmissive. The light diffusing layer **50** diffuse-reflects external light or illumination light that is incident on the writing board **103**. Moreover, the light diffusing layer **50** diffuse-reflects light that has not been transmitted through but reflected from the reflective polarizing layer **11**.

As the material of the light absorbing layer **60,** black materials can be widely used, for example. While the light absorbing layer **60** itself may appear black, because the writing board **103** includes the reflective polarizing layer **11** and the light diffusing layer **50** on the viewer's side of the light absorbing layer **60,** the surface **100s** of the writing board **103** at the viewer's side may not necessarily appear black, but may appear gray, for example. On the surface **100s** of the writing board **103** at the viewer's side, information may be displayed with black ink, for example.

Also when the writing board **100** of the peeking prevention system **1000** is replaced by the writing board **103,** by using an ink that satisfies eq. (1), information displayed on the writing board **103** can be sufficiently restrained from being visible from outside of the space **500**.

FIG. **7B** shows a schematic cross-sectional view of a writing board **103a** included in a writing board set according to another embodiment of the present invention.

The writing board **103a** differs from the writing board **103** in that the writing board **103a** includes, instead of the light absorbing layer **60** and the base **90** included in the writing board **103,** a light absorbing plate **60a** to absorb visible light. The writing board **103a** can be used without being supported on a base. The light absorbing plate **60a** can be made of the same material as the light absorbing layer **60**.

As has been described above, the writing boards **103** and **103a** includes the reflective polarizing layer **11** having a transmission axis which is orthogonal to the first direction. Therefore, when determining the color difference $\Delta E^*_{ab}$ as defined by eq. (1) for the writing board **103** or **103a** by using the method described with reference to FIG. **3A,** the transmission axis of the reflective polarizing layer **11** and the transmission axis **AXp2** of the second polarizing layer **76** are disposed so as to be parallel. The same is also true when determining the color difference $\Delta E^*_{ab}$ as defined by eq. (2) by the method described with reference to FIG. **3E**.

In the case of using a writing board (such as the writing boards **103** and **103a)** that includes a reflective polarizing layer having a transmission axis which is orthogonal to the first direction and a light absorbing layer or a light absorbing plate to absorb visible light that is disposed on an opposite side of the reflective polarizing layer from the viewer's side, an ink may be used whose $L_i^*$ is 28 or more, $a_i^*$ is -14 or more, and $b_i^*$ is -4 or more, for example. Such an ink may be a green ink, for example.

[absorptive polarizing layer]

The absorptive polarizing layer (which hereinafter may simply be referred to as a polarizer) is, typically, a resin film having a dichroic substance (e.g., iodine) adsorbed thereon and being given an orientation. For example, the absorptive polarizing layer may be a single-layered resin film, or a stack of two or more layers of resin film.

Specific examples of absorptive polarizing layers composed of a single-layered resin film include: a hydrophilic polymer film, e.g., a polyvinyl alcohol (PVA)-based film, a partially formalated PVA-based film, or an ethylene vinyl acetate copolymer-based partially saponified film, such hydrophilic polymer films having been subjected to dyeing treatment with iodine, dichroic dyes, or other dichroic substances as well as drawing; polyene-based oriented films, e.g., dehydrated PVA and dechlorinated polyvinyl chloride; and so on. Preferably, an absorptive polarizing layer which is obtained by dyeing a PVA-based film with iodine and uniaxially drawing it is used because of its superior optical characteristics.

The aforementioned dyeing with iodine is performed, for example, by immersing the PVA-based film in an aqueous solution of iodine. The stretching ratio of the aforementioned uniaxial drawing is preferably not less than 3 times and not more than 7 times. Drawing may be done after dyeing treatment or while dyeing. Alternatively, dyeing may take place after drawing. If necessary, PVA-based films are subjected to swelling treatment, cross-linking treatment, washing treatment, drying treatment, and the like. For example, before dyeing, the PVA-based film may be immersed in water and rinsed to clean the PVA-based film surface of dirt and any blocking inhibitor, and also to allow the PVA-based film to swell in order to prevent uneven dyeing and the like.

Specific examples of an absorptive polarizing layer obtained by using a stack are absorptive polarizing layers obtained by using a stack of a resin base and a PVA-based resin layer (PVA-based resin film) that is layered on the resin base, or a stack of a resin base and a PVA-based resin layer applied on the resin base. An absorptive polarizing layer that is obtained by using a stack of a resin base and a PVA-based resin layer applied on the resin base can be formed by, for example: applying a PVA-based resin solution on a resin base, and drying it to form a PVA-based resin layer on the resin base, thereby obtaining a stack consisting of the resin base and the PVA-based resin layer; and drawing and dyeing the stack so that the PVA-based resin layer becomes a polarizer. In the present embodiment, typically, drawing involves immersing a stack in an aqueous boric acid solution and drawing it. Furthermore, as necessary, drawing may further involve drawing a stack in air at a high temperature (e.g., 95°C or above) before drawing it in the aqueous boric acid solution. The resultant resin base/polarizer stack may be used as it is (i.e., the resin base may be used as a protection layer for the polarizer), or the resin base may be peeled off the resin base/polarizer stack, and any appropriate protection layer suited for the purpose may be layered on the peeled surface. Details of such a method of producing a polarizer are described in Japanese Laid-Open Patent Publication No. 2012-73580, for example. The entire disclosure of this publication is incorporated herein by reference.

The absorptive polarizing layer preferably exhibits an absorption dichroism at a wavelength from 380 nm to 780 nm. The absorptive polarizing layer has a single transmittance of preferably not less than 42.0% and not more than 46.0%, and more preferably not less than 42.5% and not more than 45.0%. The absorptive polarizing layer has a degree of polarization of preferably 97.0% or more, more preferably 99.0% or more, and even more preferably 99.9% or more.

The absorptive polarizing layer may have a thickness of e.g. not less than 1 um and not more than 80 um. The thickness of the absorptive polarizing layer is preferably not less than 1 um and not more than 30 $\mu$m, more preferably not less than 3 um and not more than 20 $\mu$m, and even more preferably not less than 5 um and not more than 18 $\mu$m.

[reflective polarizing layer]

The reflective polarizing layer includes a reflective polarizer that functions to transmit polarized light in a direction that is parallel to the transmission axis and to reflect polarized light that is orthogonal to the transmission axis. The reflective polarizer may be of a linear polarization separation type, or of a circular polarization separation type. Hereinafter, as an example, a reflective polarizer of a linear polarization separation type will be briefly described. Note that a reflective polarizer of a circular polarization separation type may be exemplified by a stack of a film on which cholesteric liquid crystal is immobilized and a $\lambda$/4 plate.

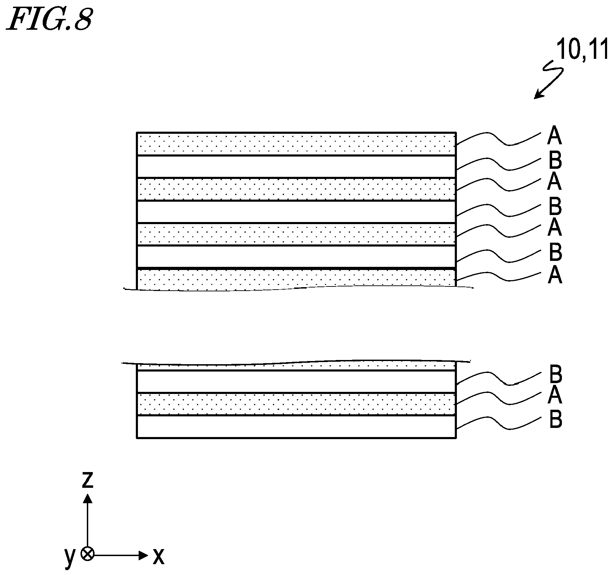

FIG. **8** is a cross-sectional view schematically showing an example structure of the reflective polarizing layers **10** and **11.** The reflective polarizing layers **10** and **11** include a reflective polarizer, as a multilayer stack in which layers A having birefringence and layers B having substantially no birefringence are alternately layered along the z axis direction. The total number of layers in such a multilayer stack may be not less than 50 and not more than 1000, for example. For example, an A layer has a refractive index nx along the x axis direction that is greater than a refractive index ny along the y axis direction, whereas a B layer has a refractive index nx along the x axis direction and a refractive index ny along the y axis direction that are substantially equal. Therefore, the difference in refractive index between an A layer and a B layer is large along the x axis direction, but substantially zero along the y axis direction. As a result of this, the x axis direction serves as a reflection axis (which is perpendicular to the transmission axis), whereas the y axis direction serves as a transmission axis. The difference in refractive index between an A layer and a B layer along the x axis direction is preferably not less than 0.2 and not more than 0.3. Note that the x axis direction corresponds to the drawing direction of a reflective polarizer in the production method for the reflective polarizer.

The A layers are preferably made of a material that exhibits birefringence after being drawn. Representative examples of such materials include naphthalene dicarboxylic acid polyesters (e.g., polyethylene naphthalate), polycarbonates, and acrylic resins (e.g., polymethyl methacrylate). Polyethylene naphthalate is preferable. The B layers are preferably made of a material that substantially does not exhibit birefringence even when drawn. A representative example of such a material is a copolyester of naphthalene dicarboxylic acid and terephthalic acid.

As the reflective polarizer, those described in Japanese National Phase PCT Laid-Open Publication No. H09-507308 may be used, for example. As the reflective polarizer, commercially available products may be used as they are, or commercially available products may be used after being subjected to secondary processing (e.g., drawing). Commercially available products include, for example, a product named DBEF (DBEF is a registered trademark) manufactured by 3M Co. and a product named APF manufactured by 3M Co.

[diffuse reflection layer or diffuse reflection plate]

The diffuse reflectance (i.e., a sum of surface diffuse reflectance and internal diffuse reflectance) of the diffuse reflection layer or diffuse reflection plate is preferably 800 or more, and more preferably 90% or more, for example. A specular reflection component in the total reflected light when visible light is incident on the diffuse reflection layer or diffuse reflection plate is preferably 50% or less (that is, there is a diffuse reflection component of 500 or more), for example.

The diffuse reflection layer or diffuse reflection plate has a surface with bump/dent features for diffuse-reflecting visible light, for example. Disposing the reflective polarizing layer on the surface of a diffuse reflection layer or diffuse reflection plate having bump/dent features makes it easy to form an air layer (low-refractive index layer) between the diffuse reflection layer or diffuse reflection plate and the reflective polarizing layer, and, even if an air layer is formed, Newton's rings are restrained from occurring. For example, the diffuse reflection layer or diffuse reflection plate may be made of a porous material of resin (porous resin) including a multitude of minute air voids formed inside a thermoplastic resin. Such a porous material of resin includes minute bumps and dents associated with the minute air voids in its interior and/or on its surface, which makes it easy to form an air layer (low-refractive index layer). Alternatively, the diffuse reflection layer or diffuse reflection plate may be made of a resin composition containing microparticles such as titanium oxide or silica microparticles dispersed in a resin, for example. In this case, however, Newton's rings may occur if an air layer is provided so as to be in contact with the diffuse reflection layer or diffuse reflection plate; therefore, when an air layer is provided as a low-refractive index layer, the diffuse reflection layer or diffuse reflection plate to be used preferably has a surface with bump/dent features to diffuse-reflect visible light. When an adhesive layer that is in contact with the diffuse reflection layer or diffuse reflection plate is provided, preferably the diffuse reflection layer or diffuse reflection plate does not have a surface with bump/dent features; for example, the diffuse reflection layer or diffuse reflection plate is preferably made of a resin composition containing microparticles such as titanium oxide or silica microparticles dispersed in a resin. For example, in the case where a low-refractive index layer other than an air layer (e.g., a porous layer) is provided, the low-refractive index layer is attached to the diffuse reflection layer or diffuse reflection plate typically via an adhesive layer.

As the diffuse reflection layer, for example, white matte PET films (e.g., Lumirror E20, E6SR, E22, E6DY, which are polyester films manufactured by Toray Industries, Inc.) (Lumirror is a registered trademark), printing paper for printers (white), screen sheets for projectors, coating on a steel partition that is painted white (resin film containing pigments), etc., can be used.

As the diffuse reflection plate, for example, white matte acrylic resin plates (PMMA) (e.g., COMOGLAS M (bone white) and COMOGLAS DFA2 (both-side matted) white M, manufactured by Kuraray Co., LTD.; Sumipex M067 white matte and Sumipex 068 white, manufactured by Sumitomo Bakelite Co., Ltd.)(COMOGLAS and Sumipex are registered trademarks) can be used.

As a base supporting the diffuse reflection layer, for example, an iron plate or a stainless steel plate (SUS plate) can be used. When a screen sheet for use with projectors that has a magnet thereon is used, it can be directly attached onto a magnetic plate (e.g., SUS403). Without being limited to this, a diffuse reflection layer may be bonded to the base by using an adhesive.

[low-refractive index layer]

The low-refractive index layer may have a porous structure. The low-refractive index layer may be made of a porous layer. Porous layers suitably used as the low-refractive index layer include silica particles, silica particles with micropores, essentially spherical particles such as silica hollow nanoparticles, fibrous particles such as cellulose nanofibers, alumina nanofibers, silica nanofibers, and flat-plate particles such as nanoclay composed of bentonite. In one embodiment, the porous layer is a porous material composed of particles (e.g., micropored particles) that are chemically bonded directly to one another. The particles composing the porous layer may be at least partially bonded to one another via a small amount (e.g., less than the mass of the particles) of a binder component. The porosity and refractive index of the porous layer can be adjusted based on the particle size, particle size distribution, and the like of the particles composing the porous layer.

Examples of methods of obtaining a porous layer include a method of forming a low-refractive index layer described in International Publication No. 2019/146628, and methods described in Japanese Laid-Open Patent Publication No. 2010-189212, Japanese Laid-Open Patent Publication No. 2008-040171, Japanese Laid-Open Patent Publication No. 2006-011175, International Publication No. 2004/113966, Japanese Laid-Open Patent Publication No. 2017-054111, Japanese Laid-Open Patent Publication No. 2018-123233, and Japanese Laid-Open Patent Publication No. 2018-123299, as well as the references mentioned therein. The entire disclosure of these publications is incorporated herein by reference.

As the porous layer, porous silica can be suitably used. Porous silica can be produced by the following method, for example: a method involving hydrolyzing and polycondensing at least one of silicon compounds, hydrolyzable silanes and/or silsesquioxanes, and their partial hydrolysates and dehydration-condensation products; a method that uses porous particles and/or hollow microparticles; and a method that generates an aerogel layer using the springback phenomenon, a method of pulverizing a gelatinous silicon compound obtained by sol-gel processing and using a pulverized gel in which micropored particles as the resultant pulverized body are chemically bonded to one another with a catalyst or the like; and so on. However, the porous layer is not limited to porous silica, and the production method is not limited to the exemplified production methods; any production method may be used for production. Silsesquioxane is a silicon compound with ($RSiO_{1.5}$; where R is a hydrocarbon group) as the basic structural unit. Although silsesquioxane is not exactly the same as silica, whose basic structural unit is $SiO_2$, it has a network structure cross-linked by siloxane bonds, similarly to silica. Therefore, any porous material that contains silsesquioxane as its basic structural unit is also referred to as porous silica or silica-based porous material.

Porous silica may be composed of micropored particles of a gelatinous silicon compound that are bonded to one another. An example of micropored particles of a gelatinous silicon compound is a pulverized body of the gelatinous silicon compound. Porous silica may be formed by coating a base with a coating solution that contains a pulverized body of a gelatinous silicon compound, for example. The pulverized body of the gelatinous silicon compound may be chemically bonded (e.g., siloxane bonded) through catalytic action, light irradiation, heating, or the like, for example.

The lower limit value of the thickness of the porous layer may be any value that is greater than the wavelength of light used, for example. Specifically, the lower limit value may be e.g. 0.3 um or more. Although the upper limit value of the thickness of the porous layer is not particularly limited, it may be e.g. 5 $\mu$m or less, and more preferably 3 $\mu$m or less. So long as the thickness of the porous layer is within the above range, the bumps and dents of the surface will not be so large as to affect layering, and therefore it can be easily made into a composite or layered with another member.

The refractive index of the porous layer is preferably 1.30 or less, for example. This makes total internal reflection likely to occur at the interface with the porous layer, i.e., makes the critical angle small. The refractive index of the porous layer is more preferably 1.25 or less, even more preferably 1.18 or less, and particularly preferably 1.15 or less. Although the lower limit of the refractive index of the porous layer is not particularly limited, it is 1.05 or more from the standpoint of mechanical strength.

The lower limit value of the porosity of the porous layer is e.g. 40% or more, preferably 50% or more, more preferably 55% or more, and still more preferably 70% or more. The upper limit value of the porosity of the porous layer is e.g. 90% or less, and more preferably 85% or less. The porosity can be calculated from the refractive index value measured with an ellipsometer, Lorentz-Lorenz's formula, for example.

The film density of the porous layer is e.g. 1 g/cm$^3$ or more, preferably 10 g/cm$^3$ or more, and more preferably 15 g/cm$^3$ or more. On the other hand, the film density is e.g. 50 g/cm$^3$ or less, preferably 40 g/cm$^3$ or less, more preferably 30 g/cm$^3$ or less, and even more preferably 2.1 g/cm$^3$ or less. The range of film density is e.g. not less than 5 g/cm$^3$ and not more than 50 g/cm$^3$, preferably not less than 10 g/cm$^3$ and not more than 40 g/cm$^3$, and more preferably not less than 15 g/cm$^3$ and not more than 30 g/cm$^3$. Alternatively, this range is e.g. not less than 1 g/cm$^3$ and not more than 2.1 g/cm$^3$. Film density may be measured by known methods.

[Examples]

Hereinafter, the present invention will be specifically described by way of Examples; however, the present invention is not to be limited by these Examples. The method of evaluation in Examples is as follows. Unless otherwise specified, "part(s)" and "%" in Examples are based on mass.

Writing board sets (combinations of a writing board and a writing utensil (marker)) according to Examples 1 to 24 and Comparative Examples 1 to 9 are shown in Table 1A, Table 1B, Table 1C, and Table 2, and details of each writing board and each marker are shown in Table 3 and Table 4. As the markers, commercially-available markers for use with whiteboards shown in Table 4 were used: (whiteboard marker marketed by PILOT Corporation, Sakura Craypas Corporation, PENTEL CO., LTD., KOKUYO Co., Ltd., and PLUS Corporation's JOINTEX COMPANY) were used. Regarding the writing boards in Table 1A, Table 1B, Table 1C, and Table 2, "Configuration 1", "Configuration 2", "Configuration 3", and "Configuration 4" represent similar structures to those of the writing board **101a** illustrated in FIG. **4B,** the writing board **100a** illustrated in FIG. **1B,** the writing board **102a** illustrated in FIG. **6B,** and the writing board **103a** illustrated in FIG. **7B,** respectively. In Table 3, "total reflectance", "L*", "a*", and "b*" indicate total reflectance on the surface of the respective writing board at the viewer's side, and L*, a*, and b* as determined from the total reflectance. These were measured by the method described with reference to FIG. **3A,** except that light from the light source **LS** was radiated without going through the polarizing layer **76**. In Table 3, "total reflectance" corresponds to a brightness obtained when the writing board is viewed from the inside of the space **500**. In Table 3, "cross reflectance" corresponds to a total reflectance measured through spectrophotometry when the surface of the writing board at the viewer's side is irradiated with light that has been transmitted through a second polarizing layer having a transmission axis which is orthogonal to the first direction, the measurements being taken by a method similar to the method described with reference to FIG. **3A.** In Table 3, "cross reflectance" corresponds to a brightness obtained when the writing board is viewed from outside of the space **500.**

The "degree of polarization" shown in Table 3 was measured in the following manner. For the absorptive polarizing layer **20** and the reflective polarizing layers **10** and **11** used in Examples and Comparative Examples, single transmittance Ts, parallel transmittance Tp, orthogonal transmittance Tc were measured by using UV-Vis spectrophotometer ("LPF200" manufactured by Otsuka Electronics Co., Ltd.), which are respectively termed Ts, Tp, and Tc of the polarizer. These Ts, Tp, and Tc values are Y values obtained by taking measurements based on the 2-degree field of view (C light source) under JIS Z8701 and subjecting them to luminosity factor correction. From the resultant Tp and Tc values, a degree of polarization P were determined from the following formula.

$$\texttt{degree of polarization } P(\%) = \{(Tp-Tc)/(Tp+Tc)\}^{1/2} \times 100$$

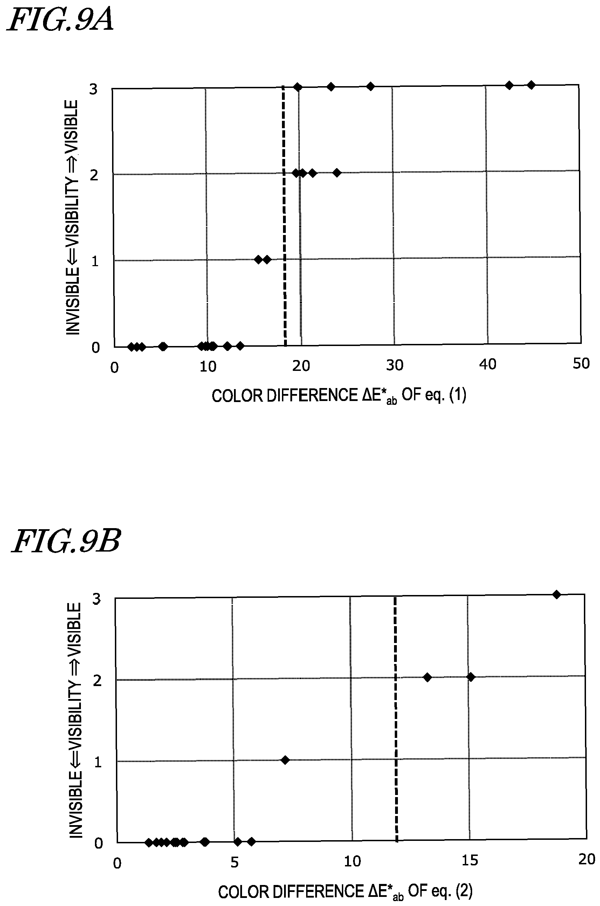

By using the methods described with reference to FIG. **3A** and FIG. **3B,** $L_d^*$, $a_d^*$, and $b_d^*$, and $L_i^*$, $a_i^*$, and $b_i^*$ were determined, and the color difference $\Delta E^*_{ab}$ as defined by eq. (1) was calculated. Moreover, by using the method described with reference to FIG. **3F,** subjective evaluation by visual inspection (in four steps from 0 to 3) was also made. Evaluation results based on the color difference $\Delta E^*_{ab}$ as defined by eq. (1) are shown in Table 1A, Table 1B, Table 1C, Table 2, and FIG. **9A.** Furthermore, $L^*_c$, $a^*_c$, and $b^*_c$ were determined by using the method described with reference to FIG. **3E,** and the color difference $\Delta E^*_{ab}$ as defined by eq. (2) was also calculated. Evaluation results based on the color difference $\Delta E^*_{ab}$ as defined by eq. (2) are shown in Table 5A, Table 5B, Table 5C, Table 6, and FIG. **9B.** In Table 5A, Table 5B, Table 5C, and Table 6, "-" indicates not taking a measurement.

The writing boards having Configurations 1 to 4 were obtained as follows. They will be described in the order of Configurations 2, 1, 3 and 4.

<writing board of Configuration 2>

1-1. absorptive polarizing layer

A long roll of polyvinyl alcohol (PVA)-based resin film having a thickness of 75 um (Kuraray Co., Ltd. product name: "PS7500") was uniaxially drawn in the longitudinal direction by a roll drawing machine to become 5.9 times as large along the longitudinal direction while simultaneously undergoing swelling, dyeing, cross-linking, and washing treatment, and finally received drying treatment, whereby a polarizer having a thickness of 28 um (single transmittance: 43.5%) was obtained. Specifically, this was as follows: The swelling treatment was performed for a 2.2 times stretch, while treating it with pure water at 20°C. Next, the dyeing treatment was carried out in an aqueous solution at 30°C containing iodine and potassium iodide at a mass ratio of 1:7, the iodine concentration being adjusted so that the resulting polarizer had a single transmittance of 43.5%, thus effecting a 1.4 times stretch. Furthermore, two stages of cross-linking treatment were adopted for the cross-linking treatment. The first stage of cross-linking treatment was performed in an aqueous solution at 40°C in which boric acid and potassium iodide had been dissolved, for a 1.2 times stretch. The boric acid content in the aqueous solution in the first stage of cross-linking treatment was 5.0 mass% and the potassium iodide content was 3.0 mass%. The second stage of cross-linking treatment was performed in an aqueous solution at 65°C in which boric acid and potassium iodide had been dissolved, for a 1.6 times stretch. The boric acid content in the aqueous solution in the second stage of cross-linking treatment was 4.3 mass% and the potassium iodide content was 5.0 mass%. The washing treatment was performed with an aqueous solution of potassium iodide at 20°C. The potassium iodide content in the aqueous solution for the washing treatment was 2.6 mass%. Finally, the drying treatment was performed at 70°C for 5 minutes, whereby a polarizer was provided. Protection films (TAC film; thickness: 40 um) were attached to both sides of the resulting polarizer, whereby an absorptive polarizing layer was obtained.

1-2.writing board

As the diffuse reflection plate, a white acrylic resin extrusion plate (manufactured by Kuraray Co., LTD.; product name: "COMOGLAS" M (bone white) #3; thickness: 5 mm; refractive index: 1.49) was provided. On one of the principal faces of the diffuse reflection plate, a reflective polarizing layer (manufactured by 3M Co.; product name: APF) and the absorptive polarizing layer obtained as above were attached in this order, whereby a writing board of Configuration 2 was obtained. For the attachment, a transparent tackiness agent (manufactured by Nitto Denko Corporation; product name: LUCIACS CS9862UA; refractive index: 1.49)(LUCIACS is a registered trademark) was used.

<writing board of Configuration 1>

Except for forming a low-refractive index layer (porous layer, refractive index 1.18) between the reflective polarizing layer and the diffuse reflection plate, the writing board of Configuration 1 was obtained in a similar manner to the writing board of Configuration 2.

The porous layer was produced by the procedure according to [Manufacturing Example 1] to [Manufacturing Example 3] below.

[Manufacturing Example 1]Preparation of coating solution for forming a low-refractive index layer

(1) gelation of silicon compound

To 2.2 g of dimethyl sulfoxide (DMSO), 0.95 g of methyltrimethoxysilane (MTMS) as a precursor of the silicon compound was dissolved to prepare Mixture A. To this Mixture A, 0.5 g of 0.01 mol/L oxalic acid aqueous solution was added, and stirred at room temperature for 30 minutes to hydrolyze the MTMS, thereby producing Mixture B containing tris(hydroxy)methylsilane.

To 5.5 g of DMSO, 0.38 g of 28 mass% ammonia and 0.2 g of pure water were added, after which the aforementioned Mixture B was further added, and stirred at room temperature for 15 minutes, thereby effecting gelation of the tris(hydroxy)methylsilane, whereby Mixture C containing a gelatinous silicon compound was obtained.

(2) aging process

Mixture C, containing the gelatinous silicon compound as prepared above, was incubated as it was at 40°C for 20 hours, thereby effecting an aging process.

(3) pulverization process

Next, the gelatinous silicon compound that had undergone the aging process as described above was crushed into granules of several millimeters to several centimeters in size, using a spatula. Next, 40 g of isopropyl alcohol (IPA) was added to Mixture C, and this was stirred lightly and allowed to stand at room temperature for 6 hours, thereby decanting the solvent and catalyst in the gel. The same decantation process was performed three times to replace the solvent, whereby Mixture D was obtained. Next, the gelatinous silicon compound in Mixture D was subjected to a pulverization process (high-pressure media-less pulverization). For the pulverization process (high-pressure media-less pulverization), a homogenizer (manufactured by S.M.T.; product name: "UH-50") was used. Into a 5-cc screw bottle, 1.85 g of the gelatinous compound in Mixture D and 1.15 g of IPA were weighed, after which pulverization was performed at 50 W, 20 kHz for 2 minutes.

This pulverization process pulverized the gelatinous silicon compound in the above Mixture D, and thus Mixture D' resulted which was a sol solution of the pulverized material. The volume-averaged particle size, which indicates the grain size variation of the pulverized material in Mixture D', was confirmed using a dynamic light scattering Nanotrac particle size analyzer (manufactured by Nikkiso Co., Ltd.; UPA-EX150) to be 0.50 to 0.70. Furthermore, to 0.75 g of this sol solution (Mixture D'), 0.062 g of a 1.5 mass% concentration MEK (methyl ethyl ketone) solution of a photobase generator (Wako Pure Chemical Industries, Ltd.; product name: WPBG266), and 0.036 g of a 5% concentration MEK solution of bis(trimethoxysilyl) ethane were added, whereby Coating Solution A for forming a low-refractive index layer was obtained.

[Manufacturing Example 2] Preparation of tackiness agent

Into a four-necked flask equipped with stirring blades, a thermometer, a nitrogen gas inlet tube, and a cooler, 90.7 mass parts of butyl acrylate, 6 mass parts of N-acryloyl morpholine, 3 mass parts of acrylic acid, 0.3 mass parts of 2-hydroxybutyl acrylate, and 0.1 mass parts of 2,2'-azobisisobutyronitrile as a polymerization initiator were placed, together with 100 g of ethyl acetate. After nitrogen replacement by introducing nitrogen gas with gentle stirring, the liquid temperature in the flask was kept at around 55°C and a polymerization reaction was carried out for 8 hours, thereby preparing an acrylic polymer solution. To 100 mass parts in solid content of the resulting acrylic polymer solution, 0.2 mass parts of an isocyanate cross-linking agent (Coronate L from Nippon Polyurethane Industry Co., Ltd.; a tolylene diisocyanate adduct of trimethylolpropane), 0.3 mass parts of benzoyl peroxide (NYPER BMT, manufactured by Nippon Oil & Fats Co., Ltd., and 0.2 mass parts of γ-glycidoxypropyl methoxysilane (manufactured by Shin-Etsu Chemical Co., Ltd.: KBM-403) were blended, thereby preparing an acrylic tackiness agent solution. Then, the above acrylic tackiness agent solution was applied to one side of a silicone-treated polyethylene terephthalate (PET) film (manufactured by Mitsubishi Polyester Film Corporation; thickness: 38 μm)) so that the thickness of the tackiness agent layer after drying was a predetermined thickness; and this was dried at 150°C for 3 minutes, thereby producing a tackiness agent layer.

[Manufacturing Example 3] Production of a stack with tackiness agent layers on both sides

A base (acrylic film) having a thickness of 30 um was coated with Coating Solution A for forming a low-refractive index layer, as prepared in Manufacturing Example 1. The wet thickness (i.e., thickness before drying) of the coating layer was about 27 um. The coating layer was treated at a temperature of 100°C for 1 minute for drying, whereby a low-refractive index layer (thickness: 0.9 um) was formed upon the base. The resultant low-refractive index layer had a refractive index of 1.18. Next, tackiness agent layers as prepared in Manufacturing Example 2 (the tackiness agent layer on the low-refractive index layer side having a thickness of 10 um, the tackiness agent layer on the base side having a thickness of 75 $\mu$m) were disposed on both sides of the base/low-refractive index layer stack, thus producing a stack with tackiness agent layers on both sides.

<writing board of Configuration 3>

Except for not forming a reflective polarizing layer, the writing board of Configuration 3 was obtained in a similar manner to Configuration 2.

<writing board of Configuration 4>

(1) light diffusing layer

To 100 mass parts of a hard coat resin (manufactured by JSR Corporation; product name: "OPSTAR KZ6661" (containing MEK/MIBK)) containing 62% zirconium oxide nanoparticles (average primary particle diameter: 10 nm; average particle diameter: 60 nm; refractive index: 2.19) as an ultrafine particle component, 11 mass parts of a 50% methyl ethyl ketone (MEK) solution of pentaerythritol triacrylate as a precursor of the resin component (manufactured by Osaka Organic Chemical Industry Ltd.; product name: "Viscoat #300"; refractive index: 1.52), 0.5 mass parts of a photopolymerization initiator (manufactured by BASF Japan Ltd.; product name: "Irgacure 907"), 0.5 mass parts of a leveling agent (manufactured by DIC Corporation; product name: "RS721"), and 15 mass parts of polymethyl methacrylate (PMMA) microparticles (manufactured by Sekisui Kasei Co., Ltd.; product name: "XX-131AA"; average particle size: 2.5 $\mu$m; refractive index: 1.49) as a light-diffusing microparticles were added. Using an agitator (manufactured by Asada Ironworks Co., Ltd.; product name: "DESPA"), this mixture was stirred for 30 minutes to effect a dispersion treatment, whereby a coating solution in which the aforementioned components were uniformly dispersed was prepared. This had a coating solution of 55%. Using a bar coater, a base composed of TAG film (manufactured by FUJIFILM Corporation; product name: "FUJITAC"; thickness: 40 $\mu$m) was coated with this coating solution. After 1 minute of drying at 100 ° C, ultraviolet with a cumulative light amount of 300 mJ was radiated, whereby a light diffusing layer was obtained.

(2) writing board

As the light absorbing plate, a black acrylic resin extrusion plate (manufactured by Kuraray Co., LTD.; product name: "COMOGLAS"502K#3; thickness: 5 mm; refractive index: 1.49) was provided. On one of the principal faces of the light absorbing plate, a reflective polarizing layer (manufactured by 3M Co.; product name: APF) and the light diffusing layer obtained as above were attached in this order, whereby the writing board of Configuration 4 was obtained. For the attachment, a transparent tackiness agent (manufactured by Nitto Denko Corporation; product name: LUCIACS CS9862UA; refractive index: 1.49)(LUCIACS is a registered trademark) was used.

[Table 1A]

| | WRITING BOARD | CROSS-REFLECTANCE HUE OF WRITING BOARD | | | DEGREE OF POLARIZATION (%) | MARKER | REFLECTANCE HUE OF MARKER | | | COLOR DIFFERENCE $\Delta E^*_{ab}$ OF eq. (1) | VISIBILITY |
|---|---|---|---|---|---|---|---|---|---|---|---|
| | | $L_d^*$ | $a_d^*$ | $b_d^*$ | | | $L_i^*$ | $a_i^*$ | $b_i^*$ | | |
| EXAMPLE 1 | CONFIGURATION 1 | 26.3 | 0.0 | -1.2 | 99.96 | P1 | 24.5 | 0.0 | -0.6 | 1.8 | 0 |
| EXAMPLE 2 | CONFIGURATION 1 | 26.3 | 0.0 | -1.2 | 99.96 | P2 | 25.7 | 2.3 | 3.4 | 5.1 | 0 |
| EXAMPLE 3 | CONFIGURATION 1 | 26.3 | 0.0 | -1.2 | 99.96 | P3 | 23.3 | 0.2 | -1.0 | 3.0 | 0 |
| EXAMPLE 4 | CONFIGURATION 1 | 26.3 | 0.0 | -1.2 | 99.96 | P4 | 26.2 | 0.7 | 4.1 | 5.3 | 0 |
| EXAMPLE 5 | CONFIGURATION 1 | 26.3 | 0.0 | -1.2 | 99.96 | P5 | 25.7 | -0.4 | 1.2 | 2.4 | 0 |
| EXAMPLE 6 | CONFIGURATION 1 | 26.3 | 0.0 | -1.2 | 99.96 | G1 | 30.8 | -10.9 | 2.0 | 12.2 | 0 |
| EXAMPLE 7 | CONFIGURATION 1 | 26.3 | 0.0 | -1.2 | 99.96 | G2 | 29.0 | -13.1 | -3.0 | 13.5 | 0 |
| EXAMPLE 8 | CONFIGURATION 1 | 26.3 | 0.0 | -1.2 | 99.96 | G3 | 30.2 | -9.8 | -2.7 | 10.6 | 0 |

[Table 1B]

| | WRITING BOARD | CROSS-REFLECTANCE HUE OF WRITING BOARD | | | DEGREE OF POLARIZATION (%) | MARKER | REFLECTANCE HUE OF MARKER | | | COLOR DIFFERENCE $\Delta E^*_{ab}$ OF eq. (1) | VISIBILITY |
|---|---|---|---|---|---|---|---|---|---|---|---|
| | | $L_d^*$ | $a_d^*$ | $b_d^*$ | | | $L_i^*$ | $a_i^*$ | $b_i^*$ | | |
| EXAMPLE 9 | CONFIGURATION 1 | 26.3 | 0.0 | -1.2 | 99.96 | G4 | 29.0 | -9.6 | -4.3 | 10.4 | 0 |
| EXAMPLE 10 | CONFIGURATION 1 | 26.3 | 0.0 | -1.2 | 99.96 | B1 | 25.3 | 2.7 | -10.7 | 10.0 | 0 |
| EXAMPLE 11 | CONFIGURATION 1 | 26.3 | 0.0 | -1.2 | 99.96 | B3 | 23.8 | 4.7 | -12.0 | 12.1 | 0 |
| EXAMPLE 12 | CONFIGURATION 1 | 26.3 | 0.0 | -1.2 | 99.96 | B4 | 26.3 | 0.9 | -10.5 | 9.3 | 0 |
| EXAMPLE 13 | CONFIGURATION 1 | 26.3 | 0.0 | -1.2 | 99.96 | B5 | 25.7 | 3.6 | -10.2 | 9.7 | 0 |
| EXAMPLE 14 | CONFIGURATION 1 | 26.3 | 0.0 | -1.2 | 99.96 | R4 | 29.2 | 9.9 | 0.5 | 10.5 | 0 |
| EXAMPLE 15 | CONFIGURATION 1 | 26.3 | 0.0 | -1.2 | 99.96 | R5 | 28.2 | 14.4 | 4.1 | 15.5 | 1 |
| EXAMPLE 16 | CONFIGURATION 2 | 26.3 | 0.0 | -1.2 | 99.96 | P4 | 26.2 | 0.7 | 4.1 | 5.3 | 0 |

[Table 1C]

| | WRITING BOARD | CROSS-REFLECTANCE HUE OF WRITING BOARD | | | DEGREE OF POLARIZATION (%) | MARKER | REFLECTANCE HUE OF MARKER | | | COLOR DIFFERENCE $\Delta E^*_{ab}$ OF eq. (1) | VISIBILITY |
|---|---|---|---|---|---|---|---|---|---|---|---|
| | | $L_d{}^*$ | $a_d{}^*$ | $b_d{}^*$ | | | $L_i{}^*$ | $a_i{}^*$ | $b_i{}^*$ | | |
| EXAMPLE 17 | CONFIGURATION 2 | 26.3 | 0.0 | -1.2 | 99.96 | G4 | 29.0 | -9.6 | -4.3 | 10.4 | 0 |
| EXAMPLE 18 | CONFIGURATION 2 | 26.3 | 0.0 | -1.2 | 99.96 | B4 | 26.3 | 0.9 | -10.5 | 9.3 | 0 |
| EXAMPLE 19 | CONFIGURATION 2 | 26.3 | 0.0 | -1.2 | 99.96 | R4 | 29.2 | 9.9 | 0.5 | 10.5 | 0 |
| EXAMPLE 20 | CONFIGURATION 3 | 26.3 | 0.0 | -1.2 | 99.96 | P4 | 26.2 | 0.7 | 4.1 | 5.3 | 0 |
| EXAMPLE 21 | CONFIGURATION 3 | 26.3 | 0.0 | -1.2 | 99.96 | G4 | 29.0 | -9.6 | -4.3 | 10.4 | 0 |
| EXAMPLE 22 | CONFIGURATION 3 | 26.3 | 0.0 | -1.2 | 99.96 | B4 | 26.3 | 0.9 | -10.5 | 9.3 | 0 |
| EXAMPLE 23 | CONFIGURATION 3 | 26.3 | 0.0 | -1.2 | 99.96 | R4 | 29.2 | 9.9 | 0.5 | 10.5 | 0 |
| EXAMPLE 24 | CONFIGURATION 4 | 37.2 | 0.5 | -6.9 | 95 | G2 | 29.0 | -13.1 | -3.0 | 16.4 | 1 |

[Table 2]

| | WRITING BOARD | CROSS-REFLECTANCE HUE OF WRITING BOARD | | | DEGREE OF POLARIZATION | MARKER | REFLECTANCE HUE OF MARKER | | | COLOR DIFFERENCE $\Delta E^*_{ab}$ OF eq. (1) | VISIBILITY |
|---|---|---|---|---|---|---|---|---|---|---|---|
| | | $L_d^*$ | $a_d^*$ | $b_d^*$ | (%) | | $L_i^*$ | $a_i^*$ | $b_i^*$ | | |
| COMPARATIVE EXAMPLE 1 | CONFIGURATION 1 | 26.3 | 0.0 | -1.2 | 99.96 | B2 | 25.9 | 9.6 | -20.2 | 21.4 | 2 |
| COMPARATIVE EXAMPLE 2 | CONFIGURATION 1 | 26.3 | 0.0 | -1.2 | 99.96 | R1 | 31.7 | 17.8 | 14.0 | 24.0 | 2 |
| COMPARATIVE EXAMPLE 3 | CONFIGURATION 1 | 26.3 | 0.0 | -1.2 | 99.96 | R2 | 38.8 | 26.0 | 30.0 | 42.5 | 3 |
| COMPARATIVE EXAMPLE 4 | CONFIGURATION 1 | 26.3 | 0.0 | -1.2 | 99.96 | R3 | 31.1 | 17.2 | 8.3 | 20.3 | 2 |
| COMPARATIVE EXAMPLE 5 | CONFIGURATION 4 | 37.2 | 0.5 | -6.9 | 95 | B2 | 25.9 | 9.6 | -20.2 | 19.7 | 2 |
| COMPARATIVE EXAMPLE 6 | CONFIGURATION 4 | 37.2 | 0.5 | -6.9 | 95 | R1 | 31.7 | 17.8 | 14.0 | 27.7 | 3 |
| COMPARATIVE EXAMPLE 7 | CONFIGURATION 4 | 37.2 | 0.5 | -6.9 | 95 | R2 | 38.8 | 26.0 | 30.0 | 44.9 | 3 |
| COMPARATIVE EXAMPLE 8 | CONFIGURATION 4 | 37.2 | 0.5 | -6.9 | 95 | R3 | 31.1 | 17.2 | 8.3 | 23.4 | 3 |
| COMPARATIVE EXAMPLE 9 | CONFIGURATION 4 | 37.2 | 0.5 | -6.9 | 95 | R5 | 28.2 | 14.4 | 4.1 | 19.9 | 3 |

[Table 3]

| WRITING BOARD | CONFIGURATION 1 | CONFIGURATION 2 | CONFIGURATION 3 | CONFIGURATION 4 |
|---|---|---|---|---|
| STRUCTURE | WRITING BOARD 101a | WRITING BOARD 100a | WRITING BOARD 102a | WRITING BOARD 103a |
| TOTAL REFLECTANCE (%) | 29.9 | 21.1 | 15.4 | 43.4 |
| $L^*$ | 61.5 | 54.5 | 49 | 71.8 |
| $a^*$ | -4.8 | -4.8 | -2.4 | -0.9 |
| $b^*$ | 5.0 | 0.9 | 2.4 | -0.6 |
| CROSS REFLECTANCE (%) | 4.8 | 4.8 | 4.8 | 9.7 |
| CROSS-REFLECTANCE HUE $L_d^*$ | 26.3 | 26.3 | 26.3 | 37.2 |
| CROSS-REFLECTANCE HUE $a_d^*$ | 0 | 0 | 0 | 0.5 |
| CROSS-REFLECTANCE HUE $b_d^*$ | -1.2 | -1.2 | -1.2 | -6.9 |
| DEGREE OF POLARIZATION (%) | 99.96 | 99.96 | 99.96 | 95 |

[Table 4]

| MARKER | MANUFACTURER | COLOR |
|---|---|---|
| P1 | PILOT | BLACK |
| P2 | SAKURA CRAYPAS | BLACK |
| P3 | Pentel | BLACK |
| P4 | KOKUYO | BLACK |
| P5 | JOINTEX | BLACK |
| G1 | PILOT | GREEN |
| G2 | SAKURA CRAYPAS | GREEN |
| G3 | Pentel | GREEN |
| G4 | KOKUYO | GREEN |
| B1 | PILOT | BLUE |
| B2 | SAKURA CRAYPAS | BLUE |
| B3 | Pentel | BLUE |
| B4 | KOKUYO | BLUE |
| B5 | JOINTEX | BLUE |

(continued)

| MARKER | MANUFACTURER | COLOR |
|--------|--------------|-------|
| R1 | PILOT | RED |
| R2 | SAKURA CRAYPAS | RED |
| R3 | Pentel | RED |
| R4 | KOKUYO | RED |
| R5 | JOINTEX | RED |

[Table 5A]

| | WRITING BOARD | CROSS-REFLECTANCE HUE OF WRITING BOARD | | | DEGREE OF POLARIZATION (%) | MARKER | REFLECTANCE HUE OF MARKER | | | COLOR DIFFERENCE $\Delta E^*_{ab}$ OF eq. (2) | VISIBILITY |
|---|---|---|---|---|---|---|---|---|---|---|---|
| | | $L_d^*$ | $a_d^*$ | $b_d^*$ | | | $L_c^*$ | $a_c^*$ | $b_c^*$ | | |
| EXAMPLE 1 | CONFIGURATION 1 | 26.3 | 0.0 | -1.2 | 99.96 | P1 | 25.1 | 0.5 | -1.3 | 1.4 | 0 |
| EXAMPLE 2 | CONFIGURATION 1 | 26.3 | 0.0 | -1.2 | 99.96 | P2 | 26.0 | -1.8 | -1.8 | 1.9 | 0 |
| EXAMPLE 3 | CONFIGURATION 1 | 26.3 | 0.0 | -1.2 | 99.96 | P3 | 24.3 | -0.4 | -1.8 | 2.1 | 0 |
| EXAMPLE 4 | CONFIGURATION 1 | 26.3 | 0.0 | -1.2 | 99.96 | P4 | 29.0 | 0.1 | 1.4 | 3.8 | 0 |
| EXAMPLE 5 | CONFIGURATION 1 | 26.3 | 0.0 | -1.2 | 99.96 | P5 | 26.5 | 0.4 | 0.4 | 1.7 | 0 |
| EXAMPLE 6 | CONFIGURATION 1 | 26.3 | 0.0 | -1.2 | 99.96 | G1 | 24.3 | -0.8 | -2.4 | 2.4 | 0 |
| EXAMPLE 7 | CONFIGURATION 1 | 26.3 | 0.0 | -1.2 | 99.96 | G2 | 25.8 | 2.0 | -2.7 | 2.6 | 0 |
| EXAMPLE 8 | CONFIGURATION 1 | 26.3 | 0.0 | -1.2 | 99.96 | G3 | 24.5 | 1.0 | -2.5 | 2.5 | 0 |

[Table 5B]

| | WRITING BOARD | CROSS-REFLECTANCE HUE OF WRITING BOARD | | | DEGREE OF POLARIZATION (%) | MARKER | REFLECTANCE HUE OF MARKER | | | COLOR DIFFERENCE $\Delta E^*_{ab}$ OF eq. (2) | VISIBILITY |
|---|---|---|---|---|---|---|---|---|---|---|---|
| | | $L_d^*$ | $a_d^*$ | $b_d^*$ | | | $L_c^*$ | $a_c^*$ | $b_c^*$ | | |
| EXAMPLE 9 | CONFIGURATION 1 | 26.3 | 0.0 | -1.2 | 99.96 | G4 | 25.9 | 2.2 | -6.4 | 5.7 | 0 |
| EXAMPLE 10 | CONFIGURATION 1 | 26.3 | 0.0 | -1.2 | 99.96 | B1 | 24.6 | 1.7 | -2.6 | 2.8 | 0 |
| EXAMPLE 11 | CONFIGURATION 1 | 26.3 | 0.0 | -1.2 | 99.96 | B3 | 25.0 | 2.0 | -2.8 | 2.9 | 0 |
| EXAMPLE 12 | CONFIGURATION 1 | 26.3 | 0.0 | -1.2 | 99.96 | B4 | 24.5 | 2.1 | -3.5 | 3.7 | 0 |
| EXAMPLE 13 | CONFIGURATION 1 | 26.3 | 0.0 | -1.2 | 99.96 | B5 | 24.2 | 4.1 | -3.4 | 5.1 | 0 |
| EXAMPLE 14 | CONFIGURATION 1 | 26.3 | 0.0 | -1.2 | 99.96 | R4 | 25.6 | 3.2 | 0.5 | 3.7 | 0 |
| EXAMPLE 15 | CONFIGURATION 1 | 26.3 | 0.0 | -1.2 | 99.96 | R5 | 26.4 | 4.9 | 4.1 | 7.2 | 1 |
| EXAMPLE 16 | CONFIGURATION 2 | 26.3 | 0.0 | -1.2 | 99.96 | P4 | 29.0 | 0.1 | 1.4 | 3.8 | 0 |

[Table 5C]

| | WRITING BOARD | CROSS-REFLECTANCE HUE OF WRITING BOARD | | | DEGREE OF POLARIZATION (%) | MARKER | REFLECTANCE HUE OF MARKER | | | COLOR DIFFERENCE $\Delta E^*_{ab}$ OF eq. (2) | VISIBILITY |
|---|---|---|---|---|---|---|---|---|---|---|---|
| | | $L_d^*$ | $a_d^*$ | $b_d^*$ | | | $L_c^*$ | $a_c^*$ | $b_c^*$ | | |
| EXAMPLE 17 | CONFIGURATION 2 | 26.3 | 0.0 | -1.2 | 99.96 | G4 | 25.9 | 2.2 | -6.4 | 5.7 | 0 |
| EXAMPLE 18 | CONFIGURATION 2 | 26.3 | 0.0 | -1.2 | 99.96 | B4 | 24.5 | 2.1 | -3.5 | 3.7 | 0 |
| EXAMPLE 19 | CONFIGURATION 2 | 26.3 | 0.0 | -1.2 | 99.96 | R4 | 25.6 | 3.2 | 0.5 | 3.7 | 0 |
| EXAMPLE 20 | CONFIGURATION 3 | 26.3 | 0.0 | -1.2 | 99.96 | P4 | 29.0 | 0.1 | 1.4 | 3.8 | 0 |
| EXAMPLE 21 | CONFIGURATION 3 | 26.3 | 0.0 | -1.2 | 99.96 | G4 | 25.9 | 2.2 | -6.4 | 5.7 | 0 |
| EXAMPLE 22 | CONFIGURATION 3 | 26.3 | 0.0 | -1.2 | 99.96 | B4 | 24.5 | 2.1 | -3.5 | 3.7 | 0 |
| EXAMPLE 23 | CONFIGURATION 3 | 26.3 | 0.0 | -1.2 | 99.96 | R4 | 25.6 | 3.2 | 0.5 | 3.7 | 0 |
| EXAMPLE 24 | CONFIGURATION 4 | 37.2 | 0.5 | -6.9 | 95 | G2 | - | - | - | - | 1 |

[Table 6]

| | WRITING BOARD | CROSS-REFLECTANCE HUE OF WRITING BOARD | | | DEGREE OF POLARIZATION (%) | MARKER | REFLECTANCE HUE OF MARKER | | | COLOR DIFFERENCE $\Delta E^*_{ab}$ OF eq. (2) | VISIBILITY |
|---|---|---|---|---|---|---|---|---|---|---|---|
| | | L* | a* | b* | | | L* | a* | b* | | |
| COMPARATIVE EXAMPLE 1 | CONFIGURATION 1 | 26.3 | 0.0 | -1.2 | 99.96 | B2 | - | - | - | - | 2 |
| COMPARATIVE EXAMPLE 2 | CONFIGURATION 1 | 26.3 | 0.0 | -1.2 | 99.96 | R1 | 30.1 | 6.1 | 10.0 | 13.3 | 2 |
| COMPARATIVE EXAMPLE 3 | CONFIGURATION 1 | 26.3 | 0.0 | -1.2 | 99.96 | R2 | 32.5 | 4.4 | 16.0 | 18.8 | 3 |
| COMPARATIVE. EXAMPLE 4 | CONFIGURATION 1 | 26.3 | 0.0 | -1.2 | 99.96 | R3 | 30.6 | 11.0 | 8.2 | 15.1 | 2 |
| COMPARATIVE EXAMPLE 5 | CONFIGURATION 4 | 37.2 | 0.5 | -6.9 | 95 | B2 | - | - | - | - | 2 |
| COMPARATIVE EXAMPLE 6 | CONFIGURATION 4 | 37.2 | 0.5 | -6.9 | 95 | R1 | - | - | - | - | 3 |
| COMPARATIVE EXAMPLE 7 | CONFIGURATION 4 | 37.2 | 0.5 | -6.9 | 95 | R2 | - | - | - | - | 3 |
| COMPARATIVE EXAMPLE 8 | CONFIGURATION 4 | 37.2 | 0.5 | -6.9 | 95 | R3 | - | - | - | - | 3 |
| COMPARATIVE EXAMPLE 9 | CONFIGURATION 4 | 37.2 | 0.5 | -6.9 | 95 | R5 | - | - | - | - | 3 |

The writing board sets of Examples 1 to 24 have a visibility evaluation of "0" (Cannot be seen) or "1" (Hard to see), and a color difference $\Delta E^*_{ab}$ as defined by eq. (1) of 16.4 or less. The writing board sets of Comparative Examples 1 to 9 have a visibility evaluation of "2" (Visible) or "3" (Easily seen), and a color difference $\Delta E^*_{ab}$ as defined by eq. (1) of 19.7 or more. These results indicate that information that is displayed with the ink on the surface of the writing board can be sufficiently restrained from being visible from outside of the space when the color difference $\Delta E^*_{ab}$ as defined by eq. (1) is 19 or less. In the graph of FIG. **9A,** a broken line indicates a line on which the color difference $\Delta E^*_{ab}$ as defined by eq. (1) = 19.

When the evaluation is made based on the color difference $\Delta E^*_{ab}$ as defined by eq. (2), it can be seen that information that is displayed with the ink on the surface of the writing board can be sufficiently restrained from being visible from outside of the space when a color difference $\Delta E^*_{ab}$ as defined by eq. (2) is 12 or less. In the graph of FIG. **9B,** a broken line indicates a line on which the color difference $\Delta E^*_{ab}$ as defined by eq. (2) = 12.

As can be seen from Table 3, the writing boards of Configuration 1, Configuration 2, and Configuration 3 are different in structure, but do not have any difference in their values of "cross reflectance", and $L_d^*$, $a_d^*$, and $b_d^*$. In other words, it is considered that there is no substantial difference in the reflectance hues of these writing boards when observed from outside of the space **500**. Therefore, once an ink is evaluated with respect to the writing board of e.g. Configuration 1 as sufficiently restraining information that is displayed with it from being visible from outside of the space, basically the same evaluation will also be true of the writing boards of Configuration 2 and Configuration 3.

Although markers containing a black, red, blue, or green ink was used in Examples and Comparative Examples, these colors are not limiting. It is considered that any marker may be used in conjunction with a writing board having a color difference $\Delta E^*_{ab}$ as defined by eq. (1) of 19 or less, whereby information that is displayed with the ink on the surface of the writing board can be sufficiently restrained from being visible from outside of the space. Likewise, without being limited to what was used in the Examples, any marker may be used in conjunction with a writing board having a color difference $\Delta E^*_{ab}$ as defined by eq. (2) is 12 or less, whereby information that is displayed with the ink on the surface of the writing board can be sufficiently restrained from being visible from outside of the space.

A peeking prevention system and a writing board set according to an embodiment of the present invention can sufficiently restrain information that is displayed with an ink on the surface of a writing board from being visible from outside of the space. Embodiments of the present invention are applicable to a whiteboard or blackboard within a conference room, for example.

While the present invention has been described with respect to exemplary embodiments thereof, it will be apparent to those skilled in the art that the disclosed invention may be modified in numerous ways and may assume many embodiments other than those specifically described above. Accordingly, it is intended by the appended claims to cover all modifications of the invention that fall within the true spirit and scope of the invention.

This application is based on Japanese Patent Application No. 2022-058215 filed on March 31, 2022, the entire contents of which are hereby incorporated by reference.

## Claims

1. A writing board set comprising:

   a writing board to reflect back, when unpolarized light is incident on a surface of the writing board at a viewer's side, polarized light which is parallel to a first direction and which has a degree of polarization of 95% or more; and
   a writing utensil containing ink, wherein, $L_d^*$, $a_d^*$, and $b_d^*$ are values of L*, a*, and b* as obtained by irradiating the surface of the writing board at the viewer's side with light that has been transmitted through a second polarizing layer having a transmission axis which is orthogonal to the first direction, and measuring total reflectance through spectrophotometry;
   $L_i^*$, $a_i"$, and $b_i^*$ are values of L*, a*, and b* as obtained by irradiating the ink having been introduced onto a surface of a glass panel with unpolarized light, and measuring total reflectance through spectrophotometry; and
   a color difference $\Delta E^*_{ab}$ as defined by eq. (1) is 19 or less:

$$\Delta E^*_{ab} = [(L_i^* - L_d^*)^2 + (a_i^* - a_d^*)^2 + (b_i^* - b_d^*)^2]^{1/2} \quad \ldots (1).$$

2. The writing board set of claim 1, wherein,

   the writing board includes
   a first polarizing layer having a transmission axis that is parallel to the first direction and
   a diffuse reflection layer or a diffuse reflection plate to diffuse-reflect visible light, the diffuse reflection layer or diffuse reflection plate being disposed on an opposite side of the first polarizing layer from the viewer's side.

3. The writing board set of claim 2, wherein,

the first polarizing layer is an absorptive polarizing layer; and
the writing board further includes
a reflective polarizing layer disposed between the diffuse reflection layer or diffuse reflection plate and the first polarizing layer, the reflective polarizing layer having a transmission axis that is substantially parallel to the first direction.

4. The writing board set of claim 3, wherein,

the writing board further includes
a low-refractive index layer disposed between the diffuse reflection layer or diffuse reflection plate and the reflective polarizing layer, the low-refractive index layer having a refractive index smaller than a refractive index of the diffuse reflection layer or diffuse reflection plate.

5. The writing board set of claim 4, wherein the low-refractive index layer has a refractive index of 1.30 or less.

6. The writing board set of claim 4 or 5, wherein the low-refractive index layer comprises a porous layer.

7. The writing board set of any one of claims 4 to 6, wherein the low-refractive index layer comprises an air layer.

8. The writing board set of any one of claims 2 to 7, wherein $L_i^*$, $a_i^*$, and $b_i^*$ satisfy one of (a), (b), (c), and (d) :

$$22 \leqq L_i^* \leqq 27, \ -1 \leqq a_i^* \leqq 3, \ \text{and}, \ -2 \leqq b_i^* \leqq 5 \quad \ldots(a);$$

$$28 \leqq L_i^* \leqq 32, \ -14 \leqq a_i^* \leqq -9, \ \text{and}, \ -5 \leqq b_i^* \leqq 3 \quad \ldots(b);$$

$$23 \leqq L_i^* \leqq 27, \ 0 \leqq a_i^* \leqq 6, \ \text{and}, \ -13 \leqq b_i^* \leqq -9 \quad \ldots(c);$$

and

$$28 \leqq L_i^* \leqq 30, \ 9 \leqq a_i^* \leqq 15, \ \text{and}, \ 0 \leqq b_i^* \leqq 5 \quad \ldots(d).$$

9. The writing board set of claim 1, wherein,
the writing board that includes

a reflective polarizing layer having a transmission axis which is orthogonal to the first direction,
a light diffusing layer to scatter visible light, the light diffusing layer being disposed on the viewer's side of the reflective polarizing layer, and
a light absorbing layer or a light absorbing plate to absorb visible light, the light absorbing layer or light absorbing plate being disposed an opposite side of the reflective polarizing layer from the viewer's side.

10. The writing board set of claim 9, wherein $L_i^*$ is 28 or more, $a_i^*$ is -14 or more, and $b_i^*$ is -4 or more.

11. A peeking prevention system comprising:

the writing board set of any one of claims 1 to 10; and
a partition to delimit from the surroundings a space in which information displayed on the writing board of the writing board set is presented, the partition having a light-transmitting portion through which the inside of the space is viewable, wherein
the light-transmitting portion includes: a transparent substrate; and a polarizing layer having a transmission axis which is orthogonal to the first direction.

*FIG.1A*

*FIG.1B*

## FIG.2

*FIG.3A*

*FIG.3B*

*FIG.3C*

*FIG.3D*

*FIG.3E*

*FIG.3F*

*FIG.4A*

*FIG.4B*

*FIG.5*

*FIG.6A*

100s

102

20
40
90

*FIG.6B*

100s

102a

20
40a

*FIG.7A*

100s                                    103

|                                      | 50 |
| 11 |
| 60 |
| 90 |

*FIG.7B*

100s                                    103a

|                                      | 50 |
| 11 |
| 60a |

FIG.8

10,11

A
B
A
B
A
B
A

B
A
B

z

y⊗ → x

EP 4 265 433 A2

*FIG.9A*

*FIG.9B*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10061138 B
- WO 2021200722 A
- JP 2012073580 A
- JP H09507308 W
- WO 2019146628 A
- JP 2010189212 A
- JP 2008040171 A

- JP 2006011175 A
- WO 2004113966 A
- JP 2017054111 A
- JP 2018123233 A
- JP 2018123299 A
- JP 2022058215 A